# EUROPÄISCHE PATENTSCHRIFT

(11) **EP 3 274 655 B1**
(45) Veröffentlichungstag und Bekanntmachung des Hinweises auf die Patenterteilung: **01.08.2018**
(21) Anmeldenummer: 16710777.0
(22) Anmeldetag: 21.03.2016
(51) Int. Cl.: G01B 21/04, G01B 5/012

(54) **KALIBRIERUNG EINER AN EINEM BEWEGLICHEN TEIL EINES KOORDINATENMESSGERÄTS ANGEBRACHTEN DREHVORRICHTUNG**
CALIBRATION OF A ROTATING DEVICE ATTACHED TO A MOVABLE PART OF A COORDINATE MEASURING DEVICE
CALIBRAGE D'UN DISPOSITIF DE ROTATION INSTALLÉ SUR UNE PARTIE MOBILE D'UN APPAREIL DE MESURE DE COORDONNÉES

(30) Priorität: 26.03.2015 DE 102015205567
(43) Veröffentlichungstag der Anmeldung: 31.01.2018
(73) Patentinhaber: Carl Zeiss Industrielle Messtechnik GmbH, 73447 Oberkochen (DE)
(72) Erfinder: HELD, Tobias, 86720 Nördlingen (DE); SAGEMÜLLER, Rainer, 73434 Fachsenfeld (DE); SEITZ, Dominik, 73525 Schwäbisch Gmünd (DE)
(74) Vertreter: Patentanwälte Bressel und Partner mbB
(86) Internationale Anmeldenummer: PCT/EP2016/056164
(87) Internationale Veröffentlichungsnummer: WO 2016/150919

(56) Entgegenhaltungen:
- EP-A2- 1 624 282
- DE-A1- 10 339 194
- DE-A1-102008 028 986
- US-A1- 2009 024 343

## Beschreibung

Die Erfindung betrifft ein Verfahren und eine Anordnung zum Kalibrieren einer an einem beweglichen Teil eines Koordinatenmessgeräts angebrachten Drehvorrichtung.

Es ist bekannt, mit Koordinatenmessgeräten (kurz: KMG) Koordinaten von Werkstücken zu bestimmen. Dabei wird in einigen Fällen eine Drehvorrichtung eingesetzt, die den an dem beweglichen Teil des KMG angebrachten Sensor in verschiedene Drehpositionen bringen kann. Bei dem Sensor, der wiederum an der Drehvorrichtung angebracht ist, kann es sich z. B. um einen taktilen Taster zum Antasten der Oberfläche von Werkstücken handeln, d.h. bei Kontakt zu der Oberfläche wird unter Verwendung des Messsystems des Koordinatenmessgeräts die Position des taktilen Tasters bestimmt (z. B. durch Verwendung eines Messkopfes, der an der Drehvorrichtung angebracht ist und den Taster trägt) und werden daraus die Koordinaten des angetasteten Oberflächenpunkts ermittelt. Alternativ oder zusätzlich werden jedoch andere Sensoren, z. B. optische, kapazitive und/oder Magnet-Sensoren an der Drehvorrichtung angeordnet, um das Werkstück zu vermessen.

Aus verschiedenen Gründen ist eine Kalibrierung der Drehvorrichtung erforderlich. Insbesondere werden durch Kalibrierung die Geometrie der Drehvorrichtung sowie ihre Relativposition und/oder ihre relative Ausrichtung zu dem beweglichen Teil des Koordinatenmessgeräts ermittelt oder überprüft. Diese Größen können sich jedoch mit der Zeit und/oder durch ein erneutes Anbringen der Drehvorrichtung an dem Koordinatenmessgerät gegenüber einem früheren Betriebszustand verändern. Geometrieänderungen (d.h. Änderungen der Form und/oder Abmessungen) im Laufe der Zeit können auf Veränderungen der Temperatur und auf Abnutzung zurückgeführt werden. Die Kalibrierung sollte daher wiederholt ausgeführt werden.

Die Veränderungen können sich in den verschiedenen Drehpositionen unterschiedlich auswirken. Dies kann insbesondere daran liegen, dass sich die Ausrichtung und/oder Position der Drehachse im Laufe der Zeit für die verschiedenen Drehpositionen unterschiedlich verändert oder sich die Ausrichtungen und/oder Positionen mehrerer Drehachsen der Drehvorrichtung im Laufe der Zeit für die verschiedenen Kombinationen der Drehpositionen bezüglich der mehreren Drehachsen unterschiedlich verändern. Im Allgemeinen handelt es sich bei den Drehbewegungen um die jeweilige Drehachse nicht um ideale Drehbewegungen. Z.B. verändert sich die Ausrichtung einer Drehachse der Drehvorrichtung während der Drehbewegung der beiden relativ zueinander um die Drehachse beweglichen Teile der Drehvorrichtung.

Daher ist es üblich, zur Kalibrierung von Drehvorrichtungen diese in mehrere unterschiedliche Drehpositionen zu bringen und jeweils Messinformation für die Kalibrierung zu erfassen. Dieser erhöhte Messaufwand ist ein wesentlicher Grund dafür, dass die Kalibrierung ein langwieriger Vorgang ist, der bei Drehvorrichtungen mit mehreren Drehachsen (z.B. sogenannten Dreh-/Schwenkgelenken) nochmals erheblich länger dauert, da bei der Erfassung der Messinformation unterschiedliche Drehpositionen bezüglicher einer der Drehachsen mit unterschiedlichen Drehpositionen bezüglicher einer anderen Drehachse kombiniert werden. Aufgrund der langen Dauer entstehen zusätzliche Ungenauigkeiten der Kalibrierung, wenn sich die Randbedingungen (insbesondere die Temperaturverteilung) während der Kalibrierung ändern. Dreh-/Schwenkgelenke sind z. B. aus EP 1 624 282 A2 bekannt.

Es ist bekannt, einen Kalibrierkörper, insbesondere eine Kugel, an einer Halteeinrichtung zu befestigen, die wie auch das mit dem KMG zu vermessende Werkstück an einer Basis des KMG positioniert ist. Insbesondere wenn die Halteeinrichtung und der Kalibrierkörper nicht oder nur in geringem Maße von Temperaturänderungen beeinflusst werden, bildet der Kalibrierkörper eine gute Positionsreferenz. Der Kalibrierkörper wird mit einem an der Drehvorrichtung angebrachten Sensor an verschiedenen Stellen seiner Oberfläche von dem zu kalibrierenden Taster taktil angetastet oder berührungslos abgetastet und aus den Messwerten des Messsystems werden die Koordinaten zumindest eines charakteristischen Punkts des Kalibrierkörpers ermittelt. Veränderungen der Geometrie der Drehvorrichtung und Veränderungen ihrer Relativposition und/oder relativen Ausrichtung zu dem beweglichen Teil des KMG führen zu scheinbaren Abweichungen der Position des charakteristischen Punktes von seiner erwarteten Position. Folglich kann die Drehvorrichtung durch Nutzung der Information über die Abweichungen kalibriert werden. Eine Halteeinrichtung zum Halten eines Kalibrierkörpers und ein Verfahren zum Kalibrieren eines Messsensors eines KMG sind z.B. aus WO 2009/152962 A2 bekannt.

DE 103 39 194 A1 beschreibt ein Verfahren zur Ermittlung systematischer geometrischer Abweichungen in technischen Mehrkörpersystemen mit einem Endeffektor und einer Basis, insbesondere Koordinatenmessgeräte. Der Endeffektor fährt Messpunkte an und an jedem Messpunkt wird der Abstand zu bezüglich der Basis ortsfesten Basisreferenzpunkten unter Verwendung eines oder mehrerer schwenkbarer Längenmesssysteme gemessen. Der Endeffektor wird in einem zu den Bewegungsachsen des technischen Mehrkörpersystems ausgerichteten Raster bewegt und es werden nacheinander Messpunkte angefahren, die nicht alle in einer Ebene liegen. Der Unterschied zwischen dem gemessenen Abstand und der Sollposition des Endeffektorreferenzpunktes an jedem Messpunkt wird ermittelt. Anhand eines kinematischen Modells des technischen Mehrkörpersystems und der ermittelten Unterschiede werden Fehlerparameter jeder Bewegungsachse an den Messpunkten ermittelt. Bei einem kartesischen System der Bewegungsachsen ergibt sich ein kartesisches Raster. Bei einem System mit einer oder mehreren rotatorischen Bewegungsachsen kann dieses Raster auch eine andere Form annehmen. Das Verfahren ermöglicht die Erfassung von systematischen Abweichungen in technischen Mehrkörpersystemen wie z.B. Koordinatenmessgeräten und Dreh-Schwenk-Gelenken auf der Basis eines kinematischen Modells.

US 2009/0024343 A1 beschreibt ein Verfahren zum Bestimmen geometrischer Fehler in einer Messmaschine, welche eine bewegliche Einheit zum Bewegen eines Zielkörpers (target) innerhalb eines Messvolumens hat. Der Zielkörper wird zu einer Anzahl von Punkten entlang einer ersten Richtung innerhalb des Messvolumens bewegt. Unter Verwendung einer Messvorrichtung wird die Abszisse von jedem der Punkte von einem Ursprung entlang der ersten Richtung gemessen. Ferner werden die Koordinaten von jedem der Punkte mittels der Maschine erfasst. Die Vorgehensweise wird für eine Anzahl von Richtungen innerhalb des Messvolumens wiederholt und Fehlerparameter der Maschine auf Basis der gemessenen Abszissen werden bestimmt. Gemäß einem Ausführungsbeispiel weist die Messmaschine am unteren Ende eines Messkopfes eine zweiachsige Drehvorrichtung auf, die der Ausrichtung eines Sensors dient, wenn die Messmaschine verwendet wird. Während der Ausführung des Messverfahrens ist jedoch ein Retroreflektor an der zweiachsigen Drehvorrichtung montiert.

Aufgrund der Erfassung von Messinformation an mehreren Oberflächenpunkten des Kalibrierkörpers ist der Kalibrier-Aufwand bei Drehvorrichtungen besonders hoch. Zur Berücksichtigung der Geometrieänderungen können insbesondere Rechenmodelle verwendet werden. Häufig haben solche Rechenmodelle eine Vielzahl von Parametern, für deren Bestimmung eine große Anzahl von Messwerten erforderlich ist. Beispielsweise wird ein solches Rechenmodell durch die Kalibrierung initialisiert. Insbesondere werden Startwerte des Rechenmodells durch die Kalibrierung ermittelt. Z.B. durch Messung von Temperaturänderungen im Laufe der Zeit und/oder Messung von Temperaturgradienten oder Temperaturunterschieden an verschiedenen Orten kann weitere Information für das Rechenmodell erhalten werden und kann mittels des Rechenmodells berechnet werden, welche Geometrieänderung seit der Initialisierung stattgefunden hat.

Insbesondere wird für die Kalibrierung der Drehvorrichtung immer derselbe Taster verwendet, der mit der Drehvorrichtung verbunden ist und mit dem die Oberfläche des Kalibrierkörpers angetastet wird.

Es ist eine Aufgabe der vorliegenden Erfindung, ein Verfahren und eine Anordnung zum Kalibrieren einer an einem beweglichen Teil eines Koordinatenmessgeräts angebrachten Drehvorrichtung anzugeben, mit denen der Aufwand für die Kalibrierung reduziert werden kann.

Die beigefügten Ansprüche definieren den Schutzumfang.

Es wird vorgeschlagen, zusätzlich zu dem Messsystem des Koordinatenmessgeräts (kurz: KMG) eine Positionsbestimmungseinrichtung für die Kalibrierung der Drehvorrichtung zu verwenden. Die Positionsbestimmungseinrichtung ist mit einer Basis des KMG verbunden. Während des Messbetriebes des KMG ist auch das zu vermessende Werkstück mit der Basis (z. B. einem Messtisch) verbunden, insbesondere unmittelbar oder mittelbar (z. B. über einen Drehtisch). Die Positionsbestimmungseinrichtung kann unmittelbar oder mittelbar über weitere Bauteile mit der Basis verbunden sein. Eine mittelbare Verbindung kann z.B. eine Bewegungseinrichtung (z.B. eine Drehvorrichtung) aufweisen, mittels der die Positionsbestimmungseinrichtung relativ zu der Basis bewegt werden kann. Die Bewegungseinrichtung ist jedoch insbesondere unabhängig von dem Antriebssystem des KMG, mit dem der bewegliche Teil des KMG bewegt wird, an dem die Drehvorrichtung angebracht ist. Ferner kann der bewegliche Teil des KMG unabhängig von der Bewegungseinrichtung bewegt werden. Daher kann die Positionsbestimmungseinrichtung in derselben Bewegungsposition verbleiben, während die Drehvorrichtung durch eine Bewegung des beweglichen Teils bewegt wird.

Bei der Basis (z. B. ein Messtisch, auf dem das zu vermessende Werkstück angeordnet wird) kann es sich um eine ortsfeste Basis handeln, wie es bei Koordinatenmessgeräten z.B. in Portalbauweise der Fall ist. Dies bedeutet, dass die Basis nicht bewegt wird, wenn der bewegliche Teil des KMG bewegt wird, um die Drehvorrichtung zu bewegen. Das Teil des KMG, an dem die Drehvorrichtung angebracht ist, kann jedoch alternativ oder zusätzlich dadurch relativ zu einer beweglichen Basis beweglich sein, indem die Basis bewegt wird. Dies ist z.B. bei KMG mit beweglichen Messtischen der Fall. Daher kann der bewegliche Teil des KMG lediglich dadurch relativ zu der Basis beweglich sein, dass die Basis relativ zu dem beweglichen Teil beweglich ist.

Die Positionsbestimmungseinrichtung weist zumindest einen Sensor auf, der ausgestaltet ist, eine Relativposition der Drehvorrichtung relativ zu der Positionsbestimmungseinrichtung zu bestimmen. Insbesondere kann der Sensor ausgestaltet sein, den Abstand der Drehvorrichtung oder eines damit verbundenen Körpers (z. B. eines an der Drehvorrichtung angebrachten Tasters) zu dem Sensor oder zu einem anderen Teil der Positionsbestimmungseinrichtung insbesondere in einer Bestimmungsrichtung des Sensors zu bestimmen. Die Relativposition kann z.B. in der Weise bestimmt werden, dass der Sensor bestätigt, dass sich die Drehvorrichtung oder der damit verbundene Körpers an einer vorgegebenen, erwarteten Position relativ zu der Positionsbestimmungseinrichtung befindet. Alternativ oder zusätzlich kann der Sensor ausgestaltet sein und/oder dazu verwendet werden, die Relativposition und insbesondere den Abstand zu messen. In diesem Fall kann der Sensor der Positionsbestimmungseinrichtung innerhalb eines Ortsbereiches der Positionsbestimmungseinrichtung verschiedene Messwerte der Relativposition erzeugen, je nachdem, in welcher Relativposition sich die Drehvorrichtung oder der damit verbundene Körper tatsächlich befindet. Der Ortsbereich ist derjenige Bereich, in dem sich die Drehvorrichtung oder der damit verbundene Körper befinden kann, sodass der Sensor die Relativposition messen kann. Z.B. ist der Sensor für Messungen innerhalb des Ortsbereichs kalibriert und/oder zugelassen und/oder liefert der Sensor ausschließlich innerhalb des Ortsbereichs eindeutige Messergebnisse (d.h. jede Position innerhalb des Ortsbereichs liefert einen individuellen, eindeutig der Position zugeordneten Messwert).

Vorzugsweise weist die Positionsbestimmungseinrichtung eine Mehrzahl der Sensoren auf. Dies ermöglicht es, die Relativposition redundant und damit mit größerer Zuverlässigkeit und/oder die Relativposition bezüglich verschiedener Bestimmungsrichtungen zu bestimmen. Insbesondere kann daher mit mehreren Sensoren die Relativposition bezüglich zweier oder dreier linearer Freiheitsgrade der Bewegung (d.h. Freiheitsgrade bezüglich jeweils einer Geraden, die in der Bestimmungsrichtung verläuft) bestimmt werden, wobei die Freiheitsgrade unabhängig voneinander sind. Die Positionsbestimmungseinrichtung kann aber alternativ z. B. Sensoren zur Bestimmung der Relativposition bezüglich mehr als drei rotatorischer und/oder linearer Freiheitsgrade der Bewegung aufweisen.

Die Positionsbestimmungseinrichtung mit dem zumindest einen Sensor ermöglicht insbesondere wie beschrieben die Bestimmung einer Relativposition der Drehvorrichtung zu der Positionsbestimmungseinrichtung. Wenn die Position und/oder Ausrichtung der Positionsbestimmungseinrichtung bezüglich der Basis bekannt ist, kann durch die bestimmte Relativposition auch die entsprechende Position der Drehvorrichtung bezüglich der Basis ermittelt werden. Dies wiederum kann dazu genutzt werden, die Drehvorrichtung zu kalibrieren. Insbesondere kann dabei in analoger Weise vorgegangen werden, wie bei der Kalibrierung einer Drehvorrichtung durch Vermessen eines Kalibrierobjekts. Z.B. nach dem Antasten einer Kalibrierkugel an verschiedenen Oberflächenpunkten durch einen an der Drehvorrichtung angeordneten taktilen Taster kann der Kugelmittelpunkt ermittelt werden. Die Position des Kugelmittelpunkts stellt einen Mittelwert der Positionen der angetasteten Oberflächenpunkte dar. Wenn sich die Geometrie der Drehvorrichtung oder ihre Position und/oder Ausrichtung an dem beweglichen Teil des Koordinatenmessgeräts verändert hat, wird durch Antastung oder berührungslose Abtastung der Kalibrierkugel eine entsprechend veränderte Position des Kugelmittelpunktes ermittelt. Im Fall der zusätzlichen Positionsbestimmungseinrichtung entspricht dem eine veränderte Relativposition der Drehvorrichtung zu der Positionsbestimmungseinrichtung. Z.B. kann ein Positions-Korrekturwert berechnet werden, der gleich der Differenz des früheren Positionswerts und des veränderten Positionswerte ist. Es ist aber auch möglich, das Ergebnis der Bestimmung der Relativposition für eine Korrektur der sonstigen Bewegungsmechanik des KMG zu nutzen, z. B. als Führungsfehlerkorrektur, d.h. die Drehvorrichtung indirekt zu kalibrieren.

Wie bereits erwähnt, kann die Position und/oder Ausrichtung der Drehvorrichtung in Bezug auf den beweglichen Teil des KMG variieren. Insbesondere wenn der bewegliche Teil mit einer Wechselschnittstelle zum Auswechseln der Drehvorrichtung verbunden ist, führt ein erneutes Einwechseln derselben Drehvorrichtung zu einer veränderten Position und/oder Ausrichtung. Insbesondere gibt es Wechselschnittstellen, bei denen die Drehpositionen des an der Wechselschnittstelle angebrachten Teils der Drehvorrichtung um eine virtuelle Rotationsachse, die z.B. eine Symmetrieachse der Wechselschnittstelle ist, variieren können. In der Praxis kommen z.B. Variationen im Bereich von einer Winkelsekunde vor. Wenn an der Drehvorrichtung z. B. ein Taststift angeordnet ist, dessen Schaft-Längsachse sich quer zu der virtuellen Rotationsachse erstreckt, führt eine Variation der Drehposition um eine Winkelsekunde bei Schaftlängen in der Größenordnung von 10 cm zu Positionsabweichungen des Tastelements des Taststifts im Bereich um einen halben Mikrometer. Mit einer in kurzer Zeit ausführbaren Kalibrierung unter Verwendung der Positionsbestimmungseinrichtung kann eine solche Positionsabweichung schnell durch Kalibrierung kompensiert werden. Die Kalibrierung kann mit geringem Aufwand wiederholt ausgeführt werden.

Wenn ein KMG abgeschaltet war und nun für den Betrieb vorbereitet wird, ändert sich die Temperatur relativ schnell und treten verhältnismäßig große Temperaturgradienten auf. Falls in dieser Aufwärmphase eine Drehvorrichtung kalibriert wird, ist mit einem größeren Kalibrierungsfehler zu rechnen als nach der Aufwärmphase. Die schnelle Kalibrierung unter Verwendung der Positionsbestimmungseinrichtung ermöglicht es, während der Aufwärmphase wiederholt zu kalibrieren. Insbesondere kann auch nach der Aufwärmphase einmal oder wiederholt kalibriert werden, ohne die für den Messbetrieb zur Verfügung stehende Zeit erheblich zu verkürzen. An diesem Beispiel kann verdeutlicht werden, dass die Kalibrierung unter Verwendung der Positionsbestimmungseinrichtung mit einer Kalibrierung durch Antasten und/oder Abtasten eines Kalibrierobjekts kombiniert werden kann. Z.B. wird zunächst eine Kalibrierung durch Antasten und/oder Abtasten eines Kalibrierkörpers durchgeführt und davor, währenddessen und/oder danach eine Kalibrierung mittels der Positionsbestimmungseinrichtung durchgeführt. Wenn davon ausgegangen werden kann, dass sich der Zustand zwischen der Ausführung der beiden Arten der Kalibrierung nicht wesentlich geändert hat, bildet die Kalibrierung durch Antasten des Kalibrierkörpers eine Referenz für die Kalibrierung unter Verwendung der Positionsbestimmungseinrichtung. Durch Wiederholung der Kalibrierung unter Verwendung der Positionsbestimmungseinrichtung kann schnell ermittelt werden, wie sich die Geometrie, Position und/oder Ausrichtung der Drehvorrichtung im Vergleich zum Referenzzeitpunkt geändert hat. Die Kalibrierung unter Verwendung der Positionsbestimmungseinrichtung kann auch zwischen den Antastungen und/oder Abtastungen verschiedener Oberflächenpunkte des Kalibrierkörpers durchgeführt werden.

Unter dem Kalibrieren einer an einem beweglichen Teil eines Koordinatenmessgeräts angebrachten Drehvorrichtung wird allgemein verstanden, dass Information über die Geometrie (z.B. Länge der Drehvorrichtung und/oder Relativposition verschiedener Drehachsen) der Drehvorrichtung und/oder über ihre Relativposition (z.B. Position an einem Wechselteller zum Ankoppeln verschiedener Drehvorrichtungen) und/oder ihre Ausrichtung (z.B. Ausrichtung einer Drehachse) bezüglich des beweglichen Teils des Koordinatenmessgeräts gewonnen wird, wobei die gewonnene Information für den Betrieb des KMG unter Verwendung der Drehvorrichtung verfügbar gemacht wird.

Gemäß Anspruch 1 wird vorgeschlagen: Ein Verfahren zum Kalibrieren einer an einem beweglichen Teil eines Koordinatenmessgeräts angebrachten Drehvorrichtung, die einen an dem beweglichen Teil des Koordinatenmessgeräts befestigten ersten Teil und einen relativ zu dem ersten Teil um eine Drehachse der Drehvorrichtung drehbaren zweiten Teil aufweist, an dem ein Messsensor zur Vermessung von Werkstücken anbringbar ist, wobei (i) die Drehvorrichtung oder ein mit dem zweiten Teil verbundener Körper, durch einen Betrieb eines Antriebssystems des Koordinatenmessgeräts in einen Ortsbereich einer Positionsbestimmungseinrichtung bewegt wird, die mit einer Basis des Koordinatenmessgeräts verbunden ist, (ii) mittels zumindest eines Sensors der Positionsbestimmungseinrichtung eine Position der Drehvorrichtung (z. B. eine Position des zweiten Teils) oder des mit dem zweiten Teil verbundenen Körpers relativ zu der Positionsbestimmungseinrichtung bestimmt wird, (iii) die Drehvorrichtung in unterschiedliche Drehpositionen gebracht wird und in den unterschiedlichen Drehpositionen jeweils die Position der Drehvorrichtung oder des mit dem zweiten Teil verbundenen Körpers relativ zu der Positionsbestimmungseinrichtung mittels des zumindest einen Sensors bestimmt wird, während sich die Drehvorrichtung oder der mit dem zweiten Teil verbundene Körper in dem Ortsbereich der Positionsbestimmungseinrichtung befindet und (iv) die Drehvorrichtung unter Berücksichtigung der mittels des zumindest einen Sensors bestimmten Positionen kalibriert wird.

Ferner wird gemäß Anspruch 6 eine Anordnung vorgeschlagen zum Kalibrieren einer an einem beweglichen Teil eines Koordinatenmessgeräts angebrachten Drehvorrichtung, wobei die Anordnung aufweist: (i) das Koordinatenmessgerät mit einer Basis, relativ zu der der bewegliche Teil durch einen Betrieb eines Antriebssystems des Koordinatenmessgeräts bewegbar ist, (ii) die Drehvorrichtung, die mit einem ersten Teil an dem beweglichen Teil des Koordinatenmessgeräts angebracht ist und die einen relativ zu dem ersten Teil um eine Drehachse der Drehvorrichtung drehbaren zweiten Teil aufweist, an dem ein Messsensor zur Vermessung von Werkstücken anbringbar ist, (iii) ein Messsystem des Koordinatenmessgeräts, von dem während eines Messbetriebes des Koordinatenmessgeräts zum Bestimmen von Koordinaten von Werkstücken Bewegungspositionen des beweglichen Teils gemessen werden, (iv) eine Positionsbestimmungseinrichtung, die zusätzlich zu dem Messsystem des Koordinatenmessgeräts vorhanden ist, die mit der Basis verbunden ist und die zumindest einen Positionssensor zur Bestimmung einer Position der Drehvorrichtung (z. B. einer Position des zweiten Teils) oder eines mit dem zweiten Teil verbundenen Körpers hat, (v) eine Steuerung des Koordinatenmessgeräts, die ausgestaltet ist, die Drehvorrichtung oder den mit dem zweiten Teil verbundenen Körper durch einen Betrieb des Antriebssystems des Koordinatenmessgeräts in einen Ortsbereich der Positionsbestimmungseinrichtung zu bewegen, sodass mittels des zumindest einen Positionssensors die Position der Drehvorrichtung (z. B. die Position des zweiten Teils) oder des mit dem zweiten Teil verbundenen Körpers relativ zu der Positionsbestimmungseinrichtung bestimmt wird, wobei die Steuerung ausgestaltet ist, die Drehvorrichtung oder den mit dem zweiten Teil verbundenen Körper in dem Ortsbereich zu positionieren, und zwar jeweils in einer von unterschiedlichen Drehpositionen der Drehvorrichtung, sodass jeweils in der einen von unterschiedlichen Drehpositionen die Position der Drehvorrichtung oder des mit dem zweiten Teil verbundenen Körpers mittels des zumindest einen Positionssensors relativ zu der Positionsbestimmungseinrichtung bestimmt wird, während sich die Drehvorrichtung oder der mit dem zweiten Teil verbundene Körper in dem Ortsbereich befindet, (vi) eine Kalibrierungseinrichtung, die ausgestaltet ist, die Drehvorrichtung unter Berücksichtigung der bestimmten Positionen zu kalibrieren.

Bei der Kalibrierung unter Verwendung der Positionsbestimmungseinrichtung kann sich, wie oben bereits beschrieben wurde, die Drehvorrichtung aufgrund von Veränderungen ihrer Geometrie, ihrer Relativposition und/oder ihrer relativen Ausrichtung zu dem beweglichen Teil des Koordinatenmessgeräts (kurz: KMG) in einer anderen Relativposition zu der Positionsbestimmungseinrichtung als zuvor (bei einer früheren Kalibrierung) befinden, die dann von der Positionsbestimmungseinrichtung gemessen wird. Es ergeben sich daher im Unterschied zu der Antastung und/oder Abtastung eines Kalibrierkörpers zwei verschiedene Messprinzipien, die jedoch auch miteinander kombiniert werden können.

Gemäß einem Messprinzip wird die Drehvorrichtung oder der damit verbundene Körper ähnlich wie beim Antasten und/oder Abtasten eines Kalibrierkörpers immer an derselben Relativposition zur Basis oder zur Positionsbestimmungseinrichtung positioniert und werden die zur Kalibrierung benötigten Informationen aus dem Messsystem des KMG gewonnen. Gemäß einer konkreten Ausführungsform wird die Drehvorrichtung oder der damit verbundene Körper an eine vorgegebene Position in einem Koordinatensystem der Positionsbestimmungseinrichtung bewegt und wird von einem Messsystem des Koordinatenmessgeräts, das zusätzlich zu der Positionsbestimmungseinrichtung vorhanden ist und von dem während eines Messbetriebes des Koordinatenmessgeräts zum Bestimmen von Koordinaten von Werkstücken Bewegungspositionen des beweglichen Teils gemessen werden, gemessen, an welcher Bewegungsposition sich der bewegliche Teil mit der daran angebrachten Drehvorrichtung befindet, während die Drehvorrichtung oder der damit verbundene Körper an der vorgegebenen Position ist. Die Drehvorrichtung wird unter Berücksichtigung der gemessenen Bewegungsposition kalibriert. Dem entspricht eine Ausführungsform der Anordnung, bei der die Steuerung ausgestaltet ist, die Drehvorrichtung oder den damit verbundenen Körper an eine vorgegebene Position in einem Koordinatensystem der Positionsbestimmungseinrichtung zu bewegen, wobei das Messsystem des Koordinatenmessgeräts ausgestaltet ist zu messen, an welcher Bewegungsposition sich der bewegliche Teil mit der daran angebrachten Drehvorrichtung befindet, während die Drehvorrichtung oder der damit verbundene Körper an der vorgegebenen Position ist, und wobei die Kalibrierungseinrichtung ausgestaltet ist, die Drehvorrichtung unter Berücksichtigung der gemessenen Bewegungsposition zu kalibrieren.

Gemäß dem zweiten Messprinzip wird die Drehvorrichtung oder der damit verbundene Körper bei verschiedenen Kalibrierungsvorgängen immer an derselben Bewegungsposition des beweglichen Teils des KMG positioniert, was gegebenenfalls zu einer veränderten Relativposition zu der Positionsbestimmungseinrichtung führt. Die Bewegungsposition wird aus den Messinformationen bestimmt, die das Messsystem des KMG liefert. Wie erwähnt kann dieses Messprinzip auch mit dem ersten Messprinzip kombiniert werden. Im Fall der Kombination werden insbesondere sowohl vom Messsystem des KMG als auch von dem zumindest einen Sensor der Positionsbestimmungseinrichtung jeweils zumindest ein Messwert erzeugt, aus denen die Bewegungsposition des beweglichen Teils des KMG und die Position der Drehvorrichtung oder des damit verbundenen Körpers ermittelt werden und für die Kalibrierung verwendet werden.

Gemäß einer konkreten Ausgestaltung des zweiten Messprinzips wird der bewegliche Teil mit der daran angebrachten Drehvorrichtung in eine vorgegebene Position in einem Koordinatensystem des Koordinatenmessgeräts bewegt und wird in der vorgegebenen Position die Relativposition der Drehvorrichtung oder des damit verbundenen Körpers relativ zu der Positionsbestimmungseinrichtung bestimmt. Dem entspricht eine Ausführungsform der Anordnung, bei der die Steuerung ausgestaltet ist, den beweglichen Teil mit der daran angebrachten Drehvorrichtung in eine vorgegebene Position in einem Koordinatensystem des Koordinatenmessgeräts zu bewegen, wobei die Positionsbestimmungseinrichtung ausgestaltet ist, in der vorgegebenen Position die Position der Drehvorrichtung oder des damit verbundenen Körpers relativ zu der Positionsbestimmungseinrichtung zu bestimmen.

Da die Drehvorrichtung oder der damit verbundene Körper bei Anwendung jedes der beiden Messprinzipien, und auch bei Kombination der beiden Messprinzipien lediglich an einer einzigen Position im Ortsbereich der Positionsbestimmungseinrichtung positioniert werden muss, um die für die Kalibrierung der Drehvorrichtung erforderliche Information (die von dem zumindest einen Positionssensor der Positionsbestimmungseinrichtung geliefert wird) zu gewinnen, wird im Vergleich zu der Antastung und/oder Abtastung eines Kalibrierobjekts an verschiedenen Oberflächenpositionen Zeit gespart. Es ist daher insbesondere möglich, die Kalibrierung schneller und/oder häufiger auszuführen. Insbesondere wird ähnlich wie bei der bekannten Kalibrierung einer Drehvorrichtung unter Verwendung eines Kalibrierkörpers die Drehvorrichtung in verschiedene Drehpositionen bezüglich ihrer zumindest einen Drehachse gebracht und wird für jede dieser Drehpositionen bzw. für die Kombination von Drehpositionen bezüglich mehrerer Drehachsen die Drehvorrichtung bzw. der mit dem zweiten Teil verbundene Körper im Ortsbereich der Positionsbestimmungseinrichtung positioniert und auf diese Weise Kalibrierungsinformation gewonnen. Insbesondere wird für jede Drehposition oder für jede Kombination von Drehpositionen bezüglich verschiedener Drehachsen lediglich für eine einzige Position im Ortsbereich der Positionsbestimmungseinrichtung Kalibrierungsinformation gewonnen.

Insbesondere führt die Steuerung hierzu einen Vorgang aus, der als Positionsregelung bezeichnet werden kann. Die Steuerung erhält von der Positionsbestimmungseinrichtung Information über die momentane Relativposition der Drehvorrichtung oder des damit verbundenen Körpers und bewegt die Drehvorrichtung oder den damit verbundenen Körper unter Nutzung dieser Information bis in die vorgegebene Position im Koordinatensystem der Positionsbestimmungseinrichtung. Alternativ kann die Steuerung oder die Drehvorrichtung oder den damit verbundenen Körper innerhalb des Ortsbereichs der Positionsbestimmungseinrichtung z.B. entlang einem vorgegebenen Bewegungspfad bewegen (z.B. einem spiralförmigen Bewegungspfad), auf dem sich mit großer Wahrscheinlichkeit die vorgegebene Position befindet. Wenn die vorgegebene Position erreicht ist, erzeugt die Positionsbestimmungseinrichtung ein Signal an das Messsystem des KMG und die momentanen Messwerte oder der momentane Messwert des Messsystems wird/werden als Bewegungsposition festgestellt, die der vorgegebenen Position der Drehvorrichtung oder des damit verbundenen Körpers in dem Koordinatensystem der Positionsbestimmungseinrichtung entspricht. Das erste Messprinzip hat auch den Vorteil, dass der zumindest eine Sensor der Positionsbestimmungseinrichtung nicht für exakte Messungen im gesamten Ortsbereich kalibriert sein muss. Er muss lediglich ausgestaltet sein, die vorgegebene Position präzise festzustellen. Nachteil ist, dass Messfehler des Messsystems des KMG die gewonnene Kalibrierinformation verfälschen.

Beim zweiten Messprinzip ist eine präzise Messung der Relativposition durch den zumindest einen Sensor der Positionsbestimmungseinrichtung erforderlich. Dies kann z.B. durch Kalibrierung des Sensors erreicht werden. Z.B. wenn der mit der Drehvorrichtung verbundene Körper eine Kugel oder Kugelkalotte ist und die Positionsbestimmungseinrichtung zumindest zwei Sensoren aufweist, die in unterschiedliche Bestimmungsrichtungen messen, kann ein Messfehler auftreten, weil die Bestimmungsrichtung nicht senkrecht auf die Kugel ausgerichtet ist und der auf der Kugel erfasste Oberflächenpunkt nicht in dem Abstand eines vollen Kugelradius zu der Senkrechten durch den Kugelmittelpunkt liegt. Vorteil ist jedoch, dass der Messfehler des Messsystems des KMG auf die Reproduzierbarkeit der vorgegebenen Position in dem Koordinatensystem des KMG begrenzt ist, in die der bewegliche Teil mit der daran angebrachten Drehvorrichtung zu bringen ist.

Die beiden erwähnten Messprinzipien und auch Kombinationen davon betreffen eine einzige Drehposition der Drehvorrichtung. Wie oben erwähnt wird aber in vielen Fällen Kalibrierinformation bei verschiedenen Drehpositionen der Drehvorrichtung benötigt oder führt dies zumindest zu besseren Ergebnissen der Kalibrierung. Die oben erwähnten Vorgehensweisen werden daher vorzugsweise bei verschiedenen Drehpositionen der Drehvorrichtung ausgeführt bzw. ist die Anordnung entsprechend ausgestaltet.

Für den zumindest einen Sensor der Positionsbestimmungseinrichtung kommen verschiedene Typen von Sensoren infrage. Insbesondere kann es sich bei dem zumindest einen Sensor um einen taktil tastenden Sensor handeln, d.h. die Relativposition der an dem beweglichen Teil des KMG angebrachten Drehvorrichtung oder des damit verbundenen Körpers relativ zu der Positionsbestimmungseinrichtung wird unter Berührung mit dem zumindest einen taktil antastenden Sensor der Positionsbestimmungseinrichtung bestimmt. Z.B. kann der taktil antastende Sensor der Positionsbestimmungseinrichtung ähnlich wie taktile Taster an Koordinatenmessgeräten elastisch, z.B. gegen eine Federung, aus einer Ruhelage ausgelenkt werden und kann daraus die Relativposition bestimmt werden. Bevorzugt wird, dass die Bewegung des taktil tastenden Sensors luftgelagert und damit reibungsarm geführt ist. Insbesondere wenn der Taster in eine vorgegebene Position bezüglich der Positionsbestimmungseinrichtung gebracht wird, während der Sensor die Relativposition misst, werden daher Hystereseeffekte minimiert.

Bevorzugt wird jedoch, dass der zumindest eine Sensor der Positionsbestimmungseinrichtung ein berührungslos arbeitender Sensor ist. Dies hat den Vorteil, dass die Bestimmung frei von auf die Drehvorrichtung oder den damit verbundenen Körper wirkenden Kräften ist, die durch die Positionsbestimmung zusätzlich auftreten. Wenn während des normalen Betriebes des KMG ein taktiler Taster an der Drehvorrichtung angebracht ist, kann es andererseits in manchen Fällen von Vorteil sein, wenn bei der Positionsbestimmung zum Zweck der Kalibrierung ähnliche Kräfte auf die Drehvorrichtung wirken wie während des normalen Betriebes zur Bestimmung von Koordinaten eines Werkstücks.

Auch wenn die Position berührungslos bestimmt wird, kann zur Simulation der während des normalen Betriebes der Drehvorrichtung wirkenden Kräfte ein Aktor vorhanden sein bzw. verwendet werden. Der Aktor übt eine entsprechende Kraft auf die Drehvorrichtung oder einen damit verbundenen Körper aus. Insbesondere kann der Aktor am Ort der Positionsbestimmungseinrichtung angeordnet sein. Eine Möglichkeit besteht darin, den Aktor an derselben Halterung zu befestigen, an der der zumindest eine Sensor der Positionsbestimmungseinrichtung angebracht ist.

Insbesondere bei einem passiv messenden Messkopf, der an der Drehvorrichtung angebracht ist und an dem ein Taster zum taktilen Antasten von Objekten angebracht ist, können abhängig von der Drehposition der Drehvorrichtung unterschiedliche Gewichtskräfte aufgrund der eigenen Masse des Messkopfes wirken. Diese Gewichtskräfte können insbesondere zu einer Auslenkung des Tasters aus seiner Ruhelage führen, die nicht durch Antastkräfte zwischen dem Taster und dem anzutastenden Objekt entsteht. Aktive Messköpfe, d.h. Messköpfe, die eine Antastkraft über den daran angebrachten Taster auf das Objekt erzeugen können, haben dagegen die Möglichkeit, die Eigengewichtskraft auszugleichen. Außer den beweglichen Teilen des Messkopfes trägt auch die Masse eines oder mehrerer an dem Messkopf angebrachter Taster zu der Eigengewichtskraft bei.

Insbesondere wenn der zumindest eine Sensor der Positionsbestimmungseinrichtung die Position berührungslos bestimmt und daher zwischen der Positionsbestimmungseinrichtung und der Drehvorrichtung bzw. dem damit verbundenen Körper keine Kräfte wirken, können die Auswirkungen der Eigengewichtskraft auf den Messkopf und optional auch den zumindest einen an dem Messkopf angebrachten Taster ermittelt werden. Hierzu kann gemäß Anspruch 1 die Drehvorrichtung in unterschiedliche Drehpositionen gebracht werden (dies gilt auch für Kombinationen von Drehpositionen, wenn die Drehvorrichtung eine Mehrzahl von Drehachsen hat) und kann jeweils die Position bestimmt werden. Unterschiede zu einer ohne Berücksichtigung der Eigengewichtskraft erwarteten Position können auf die Eigengewichtskraft zurückgeführt werden. Auf diese Weise ist eine Bestimmung des Effekts der Eigengewichtskraft möglich.

Besonders bevorzugt wird, dass der zumindest eine Sensor der Positionsbestimmungseinrichtung ein berührungslos messender Abstandssensor ist. Insbesondere hat der Abstandssensor eine Bestimmungsrichtung, die auch als Messrichtung bezeichnet werden kann. In dieser Bestimmungsrichtung wird der Abstand zu einem im Ortsbereich der Positionsbestimmungseinrichtung angeordneten Gegenstand bestimmt. Die Bestimmungsrichtung entspricht einer Geraden im Raum. Außer der Richtung ist auch die Position der Geraden von Bedeutung.

Gut geeignet sind optische berührungslos messende Sensoren, insbesondere Laserinterferometer. Besonders bevorzugt werden Mehrwellen-Laserinterferometer, d.h. Sensoren, die Laserstrahlung unterschiedlicher Wellenlängen nutzen. Sie verfügen über einen besonders großen Messbereich, in dem der Abstand zu dem zu bestimmenden Objekt eindeutig festgestellt wird. Dieser Eindeutigkeitsbereich kann mit der entsprechenden Länge des Ortsbereichs der Positionsbestimmungseinrichtung gleichgesetzt werden, d.h. der Ortsbereich hat in der Bestimmungsrichtung die Länge des Eindeutigkeitsbereichs der Abstandsmessung. Geeignete Mehrwellen-Laserinterferometer mit einem Eindeutigkeitsbereich von mehreren Millimetern und einer Auflösung im Bereich von 10 nm werden auf dem Markt angeboten. Ein großer Ortsbereich der Positionsbestimmungseinrichtung hat den Vorteil, dass Drehvorrichtungen mit unterschiedlichen Geometrien nacheinander und/oder dieselbe Drehvorrichtung in verschiedenen Drehpositionen auf einfache Weise unter Verwendung derselben Positionsbestimmungseinrichtung kalibriert werden können.

Mit einem Mehrwellen-Laserinterferometer oder einem anderen berührungslos messenden Abstandssensor kann der Abstand der im Ortsbereich der Positionsbestimmungseinrichtung angeordneten Drehvorrichtung oder des an der Drehvorrichtung angeordneten Körpers zu dem Sensor oder zu einem anderen Bezugspunkt gemessen werden. Z.B. kann bei einer ersten Kalibrierung durch die Positionsbestimmungseinrichtung der Abstand und damit die Relativposition der Drehvorrichtung oder des Körpers bestimmt werden. Anschließend wird die Drehvorrichtung oder der Körper aus dem Ortsbereich der Positionsbestimmungseinrichtung entfernt und wird die Drehvorrichtung z.B. für den regulären Messbetrieb des KMG verwendet. Zu einem späteren Zeitpunkt wird die Drehvorrichtung oder der Körper wieder in den Ortsbereich der Positionsbestimmungseinrichtung bewegt und wird wieder der Abstand bzw. die Relativposition der Drehvorrichtung oder des Körpers durch den zumindest einen Sensor bestimmt. Daraus wird insbesondere die Änderung der Relativposition (zu der Positionsbestimmungseinrichtung und/oder in Bezug auf das Messsystem des KMG) im Vergleich zu der ersten Kalibrierung ermittelt und z.B. für eine erneute Kalibrierung der Drehvorrichtung verwendet. Diese Vorgehensweise hat den Vorteil, dass sich ein systematischer Fehler oder Offsetwert bei der Positionsbestimmung durch die Positionsbestimmungseinrichtung nicht auf das Ergebnis auswirkt. Insbesondere bleibt der zumindest eine Sensor der Positionsbestimmungseinrichtung zwischen der ersten und der zweiten Positionsbestimmung der Drehvorrichtung oder des Körpers kontinuierlich in Betrieb. Alternativ wird der Betrieb des zumindest einen Sensors nach der ersten Positionsbestimmung wieder gestartet, bevor die Drehvorrichtung oder der Körper zum Zweck der zweiten Positionsbestimmung wieder in den Ortsbereich der Positionsbestimmungseinrichtung hineinbewegt wird.

Weitere mögliche Typen von Abstandssensoren, die berührungslos messen, sind kapazitive Sensoren oder Wirbelstromsensoren. In diesen Fällen muss zumindest der Teil der Drehvorrichtung oder des daran angeordneten Körpers, dessen Relativposition zu der Positionsbestimmungseinrichtung bestimmt werden soll, elektrisch leitend sein. Der Teil kann mit einer elektrisch leitfähigen Schicht auf seiner Oberfläche versehen sein, z.B. mit einem Metall bedampft worden sein. Alternativ oder zusätzlich kann der Teil oder der Körper z.B. einen elektrisch leitfähigen, z.B. metallischen Kern haben. Insbesondere ist es möglich, zum Zweck der Positionsbestimmung einen Körper an der Drehvorrichtung anzuordnen, der elektrisch leitfähig ist. Der Körper ist z.B. eine Kugel oder Kugelkalotte. Von mehreren Sensoren der Positionsbestimmungseinrichtung lässt sich in diesem Fall auf einfache Weise der Kugelmittelpunkt bestimmen, insbesondere analog zu bekannten Kalibrierverfahren, die einen kugelförmigen Kalibrierkörper verwenden.

Weitere geeignete Typen von Sensoren sind Laser-Triangulationsscanner oder Kameras, insbesondere Digitalkameras, die zweidimensionale digitale Bilder erzeugen. Alternativ kann es sich bei der Kamera um eine TOF (Time of Flight)-Kamera handeln, die für jedes Bildelement einer Matrix-Zeile oder einer zweidimensionalen Bildmatrix Abstandsinformation zu dem im Ortsbereich der Positionsbestimmungseinrichtung positionierten Objekt erfasst.

Wenn ein Teil der Drehvorrichtung oder des an der Drehvorrichtung angeordneten Körpers magnetisch ist und z.B. einen Permanentmagneten aufweist, kann der zumindest eine Sensor ein Hall-Sensor oder ein magnetoresistiver Sensor sein. Alternativ oder zusätzlich kann die Drehvorrichtung zum Zweck des An- und Abkoppelns von Sensoren, die der Bestimmung von Koordinaten von Werkstücken dienen, an Koordinatenmessgeräten eine Befestigungs-Schnittstelle haben, z.B. einen sogenannten Wechselteller. In vielen Fällen sind die Schnittstellen mit Magneten ausgestattet, da die Befestigungskraft, mit der der Sensor an dem KMG gehalten wird, eine Magnetkraft ist. In diesem Fall kann von einem der erwähnten Magnetsensoren der Positionsbestimmungseinrichtung ein magnetischer Teil der Schnittstelle hinsichtlich seiner Relativposition bestimmt werden.

Vorzugsweise weist die Positionsbestimmungseinrichtung zumindest zwei Sensoren auf, mittels denen die Position der Drehvorrichtung oder des an der Drehvorrichtung angeordneten Körpers relativ zu der Positionsbestimmungseinrichtung bestimmt wird, wobei jeder der zumindest zwei Sensoren eine Bestimmungsrichtung hat, in der er die Position der Drehvorrichtung oder des Körpers relativ zu der Positionsbestimmungseinrichtung bestimmt, und wobei die Bestimmungsrichtungen der zumindest zwei Sensoren paarweise senkrecht zueinander verlaufen. Wie noch näher ausgeführt wird, werden sich die den Bestimmungsrichtungen entsprechenden Geraden nicht exakt schneiden, sondern sich nahe aneinander vorbei erstrecken. Die Anordnung mit den zumindest zwei oder zumindest drei Sensoren, deren Bestimmungsrichtungen paarweise senkrecht zueinander verlaufen, kann in Analogie zu einem kartesischen Koordinatensystem als kartesische Sensoranordnung bezeichnet werden. Im Fall von zwei solchen Sensoren wird die Relativposition bezüglich zweier relativ zueinander unabhängiger Freiheitgrade der Bewegung bestimmt, im Fall von drei solchen Sensoren bezüglich dreier voneinander unabhängiger linearer Freiheitsgrade der Bewegung. Die Anordnungen können kurz als 2D- bzw. 3D-Sensoranordnungen bezeichnet werden. Es ist jedoch nicht zwingend erforderlich, dass die Bestimmungsrichtungen der zwei bzw. drei Sensoren paarweise senkrecht zueinander stehen, um zweidimensionale bzw. dreidimensionale Positionsinformation zu erhalten.

Vorzugsweise wird der Teil der Drehvorrichtung oder des an der Drehvorrichtung angeordneten Körpers, dessen Relativposition zu der Positionsbestimmungseinrichtung gemessen werden soll, in den Bereich der Positionsbestimmungseinrichtung bewegt, in dem sich die Bestimmungsrichtungen kreuzen, d.h. den alle Bestimmungsrichtungen der zweidimensionalen oder dreidimensionalen Sensoranordnung durchlaufen. Im Fall eines kugelförmigen Körpers wird vorzugsweise der Mittelpunkt der Kugel am Kreuzungspunkt der Bestimmungsrichtungen positioniert.

Insbesondere weist die Positionsbestimmungseinrichtung eine Halterung auf, die den zumindest einen Sensor der Positionsbestimmungseinrichtung hält. Insbesondere kann die Halterung je nach Ausführung der Positionsbestimmungseinrichtung zwei bis fünf Sensoren halten. Wenn die Halterung zumindest zwei Sensoren hält, deren Bestimmungsrichtungen nicht auf einen gemeinsamen Kreuzungspunkt ausgerichtet sind, sondern z.B. parallel zueinander und in einem Abstand zueinander verlaufen, kann nicht nur die Relativposition der Drehvorrichtung oder des an der Drehvorrichtung angeordneten Körpers relativ zu der Positionsbestimmungseinrichtung bestimmt werden, sondern auch die Ausrichtung der Drehvorrichtung oder des Körpers. Z.B. können die Bestimmungsrichtungen verschiedener Sensoren auf unterschiedliche Längsabschnitte eines zylinderförmigen Teils der Drehvorrichtung oder des Körpers ausgerichtet sein und können die Ausrichtung und Relativposition des zylinderförmigen Teils bestimmt werden. Um die Ausrichtung quer zu einer Längsachse des zylinderförmigen Teils in zwei Richtungen messen zu können, werden vier Sensoren verwendet, von denen z.B. jeweils zwei Bestimmungsrichtungen haben, die auf denselben Teil des zylinderförmigen Teils ausgerichtet sind. Z.B. verlaufen die Bestimmungsrichtungen der Sensoren, die auf denselben Teil des zylinderförmigen Teils und damit auf dasselbe Zielgebiet im Ortsbereich der Positionsbestimmungseinrichtung ausgerichtet sind, senkrecht zueinander. Ein weiterer fünfter Sensor kann mit seiner Bestimmungsrichtung in der genannten Längsrichtung des zylinderförmigen Teils ausgerichtet sein, wobei seine Bestimmungsrichtung insbesondere auf die Kreuzungspunkte der Bestimmungsrichtungen beider Sensor-Paare ausgerichtet ist, die jeweils auf einen gemeinsamen Teil des zylinderförmigen Teils bzw. auf dasselbe Zielgebiet ausgerichtet sind.

Insbesondere kann die Halterung fest mit der Basis des KMG verbunden sein. Alternativ, wie bereits erwähnt, kann die Halterung über eine Bewegungseinrichtung mit der Basis verbunden sein, sodass die Bewegungsposition der Halterung und damit der Sensoren der Positionsbestimmungseinrichtung relativ zu der Basis einstellbar ist. Z.B. im Fall der oben erwähnten vier oder fünf Sensoren kann eine Drehachse der Drehvorrichtung mit der genannten Längsachse zusammenfallen, d.h. die jeweils zwei Paare von Sensoren, deren Bestimmungsrichtungen auf dasselbe Zielgebiet ausgerichtet sind, können um die Drehachse gedreht werden. Insbesondere diese Anordnung ermöglicht es, die Drehvorrichtung oder den daran angeordneten Körper bei unterschiedlichen Drehpositionen der Drehvorrichtung ungehindert in den Ortsbereich der Positionsbestimmungseinrichtung zu bewegen.

Wie oben erwähnt kann die Drehvorrichtung nicht nur eine Drehachse, sondern mehrere Drehachsen (z.B. zwei Drehachsen wie bei einem Dreh-/Schwenkgelenk) haben. Insbesondere sind die Drehachsen kinematisch betrachtet seriell angeordnet, d.h. der zweite Teil der Drehvorrichtung ist relativ zu dem ersten Teil um eine erste Drehachse der Drehvorrichtung drehbar und ein dritter Teil der Drehvorrichtung ist relativ zu dem zweiten Teil um eine zweite Drehachse der Drehvorrichtung drehbar. Im Fall von zwei kinematisch seriellen Drehachsen ist der Sensor des KMG derart mit dem dritten Teil verbunden, dass seine Drehposition bezüglich der zweiten Drehachse durch die Drehposition des dritten Teils eindeutig bestimmt ist. Wenn bei einer solchen Drehvorrichtung der mit dem zweiten Teil verbundene Körper in den Ortsbereich der Positionsbestimmungseinrichtung bewegt wird, um die Kalibrierinformation zu gewinnen, dann ist der Körper vorzugsweise im Fall von zwei kinematisch seriell zueinander angeordneten Drehachsen mit dem dritten Teil verbunden und seine Drehposition bezüglich der zweiten Drehachse eindeutig durch die Drehposition des dritten Teils bezüglich der zweiten Drehachse bestimmt. Im Fall von mehr als zwei kinematisch seriell zueinander angeordneten Drehachsen ist der Körper vorzugsweise mit dem Teil der Drehvorrichtung verbunden, der durch eine Drehung um die letzte der seriell zueinander angeordneten Drehachsen drehbar ist. Im Fall von zwei seriell zueinander angeordneten Drehachsen ist die letzte Drehachse die zweite Drehachse. Im Fall von drei zueinander seriell angeordneten Drehachsen ist die letzte Drehachse die dritte Drehachse.

Bei seriell zueinander angeordneten Drehachsen wird der Sensor üblicherweise an dem durch die Drehung der letzten Drehachse drehbeweglichen Teil entweder direkt oder indirekt befestigt. Seine Drehposition ist üblicherweise durch die Drehposition des um die letzte Drehachse drehbeweglichen Teils der Drehvorrichtung eindeutig bestimmt. Vorzugsweise wird der Körper, der zur Gewinnung der Kalibrierinformation im Ortsbereich der Positionsbestimmungseinrichtung angeordnet wird, mit demselben Teil der Drehvorrichtung verbunden (und zwar nicht indirekt über eine Drehachse der Drehvorrichtung) wie der Sensor des KMG oder wie eine Schnittstelle zur Befestigung des Sensors. Z.B. kann der Körper an der Schnittstelle zur Befestigung des Sensors befestigt sein, wenn der Sensor nicht an der Schnittstelle befestigt ist. Dies gilt nicht nur für den Fall einer Drehvorrichtung mit mehreren Drehachsen, sondern auch für eine Drehvorrichtung mit einer einzigen Drehachse. In diesem Fall ist die Schnittstelle zur Befestigung des Sensors mit dem zweiten Teil verbunden und ist die Drehposition der Schnittstelle eindeutig durch die Drehposition des zweiten Teils definiert. Alternativ kann der Körper gleichzeitig mit dem Sensor mit der Drehvorrichtung verbunden sein, z.B. im Fall einer Drehvorrichtung mit einer einzigen Drehachse mit dem zweiten Teil der Drehvorrichtung oder im Fall einer Drehvorrichtung mit mehreren kinematisch seriellen Drehachsen mit dem letzten Teil der Drehvorrichtung. Wenn der Körper mit dem letzten Teil der Drehvorrichtung (im Fall einer Drehvorrichtung mit einer einzigen Achse der zweite Teil der Drehvorrichtung) verbunden ist und seine Drehposition bezüglich der letzten Drehachse eindeutig durch die Drehposition des letzten Teils definiert ist, kann die gesamte Drehvorrichtung auf einfache Weise kalibriert werden, indem der Körper im Ortsbereich der Positionsbestimmungseinrichtung positioniert wird und die Kalibrierinformation in diesem Zustand gewonnen wird. Entsprechendes gilt dann, wenn nicht ein mit dem letzten Teil verbundener Körper (z.B. der Sensor oder ein anderer Körper), sondern der letzte Teil der Drehvorrichtung selbst im Ortsbereich der Positionsbestimmungseinrichtung positioniert wird und in diesem Zustand die Kalibrierinformation gewonnen wird. Im Fall von zumindest zwei seriell zueinander angeordneten Drehachsen der Drehvorrichtung hat dies den Vorteil, dass die Drehvorrichtung bezüglich aller Drehachsen auf einfache Weise kalibriert werden kann. Es ist jedoch nicht ausgeschlossen, den Körper bei mehreren kinematisch seriell zueinander angeordneten Drehachsen nicht mit dem letzten Teil zu verbinden, sondern mit einem nur um einen Teil der Drehachsen relativ zu dem ersten Teil drehbeweglichen Teil der Drehvorrichtung oder alternativ statt dem Körper diesen zwischen dem ersten Teil und dem letzten Teil der Drehvorrichtung angeordneten und nur um einen Teil der Drehachsen relativ zu dem ersten Teil drehbeweglichen Teil in dem Ortsbereich der Positionsbestimmungseinrichtung anzuordnen und in diesem Zustand die Kalibrierinformation zu gewinnen.

Insbesondere ist es auch möglich, unter Verwendung der Positionsbestimmungseinrichtung nicht nur die Drehvorrichtung zu kalibrieren, sondern auch einen an der Drehvorrichtung angeordneten Sensor (z.B. einen taktilen Taster), wobei der Sensor über zumindest eine Drehachse der Drehvorrichtung drehbeweglich mit dem ersten Teil der Drehvorrichtung verbunden ist. Insbesondere kann der Sensor mit dem letzten Teil der Drehvorrichtung verbunden sein und kann seine Drehposition bezüglich der letzten Drehachse der Drehvorrichtung eindeutig durch die Drehposition des letzten Teils bezüglich der letzten Drehachse der Drehvorrichtung bestimmt sein.

Insbesondere kann Kalibrierinformation zur Kalibrierung sowohl der Drehvorrichtung als auch des Sensors gleichzeitig dadurch gewonnen werden, dass der Sensor oder ein mit ihm verbundener Körper in den Ortsbereich der Positionsbestimmungseinrichtung gebracht wird und die Position des Sensors oder des damit verbundenen Körpers bestimmt wird. Dies liefert deshalb eine gemeinsame Kalibrierinformation, weil die Position des Sensors oder des damit verbundenen Körpers sowohl von der Position und Geometrie der Drehvorrichtung als auch von der Position und Geometrie des Sensors abhängt. Im Fall der Verwendung des Körpers, der mit dem Sensor verbunden ist, gilt dies jedenfalls dann, wenn der Körper über zumindest einen Teilabschnitt des Sensors mit der Drehvorrichtung verbunden ist und daher zumindest dieser Teilabschnitt dieses Sensors die Position des Körpers mitbestimmt.

Die Drehvorrichtung oder der damit verbundene Körper kann in den Ortsbereich der Positionsbestimmungseinrichtung bewegt werden und ruhen, während der zumindest eine Sensor die Relativposition bestimmt. Es ist jedoch auch möglich, dass der Taster bzw. der Teil des Tasters kontinuierlich bewegt wird, während der zumindest eine Sensor die Relativposition bestimmt. Bei der kontinuierlichen Bewegung kann es sich gemäß einem der bereits beschriebenen Messprinzipien z.B. um eine spiralförmige Bewegung handeln. Es ist aber auch möglich, dass der Taster bzw. der Teil des Tasters kontinuierlich an dem zumindest einen Sensor vorbeibewegt wird und insbesondere an einer Seite in den Ortsbereich eintritt und an einer gegenüberliegenden Seite den Ortsbereich wieder verlässt.

Von Vorteil ist es, wenn die Bestimmung der Relativposition bei unveränderten Randbedingungen (insbesondere Temperaturverhältnissen) des Betriebes des KMG wiederholt ausgeführt wird. Dies ermöglicht es insbesondere, zufällige Fehler bei der Positionsbestimmung zu eliminieren, z.B. durch Mittelwertbildung der Positionswerte der einzelnen Messungen.

Vorzugsweise besteht die Halterung aus einem Material, das einen kleinen Temperaturausdehnungskoeffizienten hat. Beispiele sind Metall-Legierungen wie z.B. die Legierung mit der Werkstoffnummer 1.3912 des Stahlinstituts VDEh oder faserverstärkte Kunststoffe, deren Faser-Längsrichtungen gewickelten Bahnen folgen. Alternativ oder zusätzlich kann der Einfluss von Temperaturschwankungen und Temperaturgradienten auf die Positionsbestimmungseinrichtung und insbesondere auf deren Halterung rechnerisch korrigiert werden, wenn entsprechende Informationen über die Temperatur gesammelt werden. Z.B. kann in einem einfachen Fall die Temperatur der Halterung und optional auch die Temperatur der Umgebung der Halterung gemessen werden.

Vorzugsweise wird angestrebt, dass die auf der Basis positionierte Halterung eine möglichst geringe Höhe hat. Dadurch stellt die Halterung für die meisten Bewegungen während des Messbetriebes des KMG kein Hindernis dar. Andererseits ist es von Vorteil, wenn insbesondere ein Sensor der Positionsbestimmungseinrichtung, dessen Bestimmungsrichtung horizontal verläuft, auf einem Höhenniveau über der Basis positioniert ist, auf dem sich während des Betriebes des KMG auch Drehvorrichtung befindet.

Insbesondere kann die Positionsbestimmungseinrichtung (z.B. die Halterung) zumindest einen Bereich aufweisen, der zur Bestimmung der Position und/oder Ausrichtung der Positionsbestimmungseinrichtung im Betriebsbereich des KMG benutzt wird. Dieser Bereich kann als charakteristischer Bereich oder als Artefakt ausgestaltet sein. Z.B. kann es sich um einen Eckbereich der Halterung oder um eine Aussparung oder Verformung (z.B. um eine Senkung) der Halterung handeln. Der zumindest eine Bereich kann mit einem an dem beweglichen Teil des KMG angeordneten Sensor abgetastet werden, z. B. mit einem taktilen Taster angetastet werden, und zwar vorzugsweise an mehreren Oberflächenpunkten und auf diese Weise kann die Position und/oder Ausrichtung der Positionsbestimmungseinrichtung bestimmt werden. Insbesondere unter Verwendung von Zusatzinformation über die Geometrie der Positionsbestimmungseinrichtung kann dann die Drehvorrichtung oder der damit verbundene Körper in den Ortsbereich der Positionsbestimmungseinrichtung bewegt werden, um die Relativposition zu der Positionsbestimmungseinrichtung zu bestimmen. Die Position des charakteristischen Bereichs oder des Artefakts kann auch wiederholt durch Abtasten mit dem Sensor ermittelt werden, um Auswirkungen einer thermischen Drift zu ermitteln. Eine andere Art der Bestimmung der thermischen Drift unter Verwendung der Sensoren der Positionsbestimmungseinrichtung wird noch beschrieben.

Alternativ oder zusätzlich kann zur Bestimmung der Position und/oder Ausrichtung der Positionsbestimmungseinrichtung im Betriebsbereich des KMG die Drehvorrichtung oder der damit verbundene Körper in den Ortsbereich der Positionsbestimmungseinrichtung bewegt werden. Die Tatsache, dass die Drehvorrichtung oder der damit verbundene Körper den Ortsbereich erreicht hat, wird insbesondere dadurch festgestellt, dass der zumindest eine Sensor die Relativposition der Drehvorrichtung oder des damit verbundenen Körpers bestimmt. Bei einer Mehrzahl von Sensoren, deren Bestimmungsrichtungen einander kreuzen, kann die Position und bei verschiedenen Bereichen, in denen sich Bestimmungsrichtungen von Sensoren kreuzen, auch die Ausrichtung der Positionsbestimmungseinrichtung bestimmt werden, indem der Taster in den Bereich des Kreuzungspunkts oder in die Bereiche der Kreuzungspunkte bewegt wird und die Sensoren entsprechende Bestimmungssignale erzeugen. Insbesondere befindet sich die Drehvorrichtung oder der damit verbundene Körper (z.B. eine Kugel) genau am Kreuzungspunkt von Bestimmungsrichtungen, wenn die dem Kreuzungspunkt zugeordneten Sensoren alle den kleinstmöglichen (zumindest annähernd) gleichen Abstand messen. Die so aufgefundene Position und/oder Ausrichtung der Positionsbestimmungseinrichtung kann später wieder mit der Drehvorrichtung oder dem damit verbundenen Körper angefahren werden, um die Drehvorrichtung zu kalibrieren.

Zusammenfassend können folgende Vorteile erwähnt werden: Insbesondere die Position eines Körpers, der eine Kugel oder Kugelkalotte ist, kann mit hoher Genauigkeit durch die Positionsbestimmungseinrichtung bestimmt werden. Wenn die Relativposition der Drehvorrichtung oder des damit verbundenen Körpers berührungslos gemessen wird, wirken keine Kräfte auf die Drehvorrichtung, die die Messung verfälschen können. Es tritt dann auch keine unerwünschte Verformung auf und es entstehen keine Hystereseeffekte. Auch entsteht keine Reibung zwischen dem Sensor der Positionsbestimmungseinrichtung und der Drehvorrichtung oder dem damit verbundenen Körper. Aufgrund der Tatsache, dass für jede Drehposition oder Kombination von Drehpositionen lediglich eine Relativposition der Drehvorrichtung oder des damit verbundenen Körpers von der Positionsbestimmungseinrichtung bestimmt werden muss, kann das Verfahren im Vergleich zu der Kalibrierung durch Antastung mehrerer Punkte eines Kalibrierobjekts sehr schnell ausgeführt werden. Auch sind klassische Verfahren bekannt, bei denen drei Paare von parallel zueinander ausgerichteten Zylinderflächen verwendet werden, wobei gleichzeitiger Kontakt mit jeweils beiden Zylinderflächen desselben Paares hergestellt wird. Dabei können jedoch unerwünschte Fehler durch Reibung oder Verformung auftreten. Bei dem erfindungsgemäßen Verfahren lässt sich die Relativposition und optional die Ausrichtung der Drehvorrichtung oder des damit verbundenen Körpers in einfacher Weise bezüglich der gewünschten Freiheitsgrade der Bewegung bestimmen. Es muss lediglich die entsprechende Anzahl von Sensoren als Teil der Positionsbestimmungseinrichtung vorgesehen werden und die Sensoren müssen lediglich entsprechend den zu bestimmenden Freiheitsgraden der Bewegung ausgerichtet werden. Besonders gut ist das Verfahren geeignet, wenn die Position eines sphärisch geformten Körpers bestimmt werden soll. Insbesondere bei einer Tool Center Point (TCP) Bewegung verkürzen sich die Fahrwege im Vergleich zu einer Kalibrierung durch Antastung eines Kalibrierkörpers an verschiedenen Oberflächenpunkten.

Insbesondere wird ein Taster, der über die Drehvorrichtung an dem beweglichen Teil des KMG angeordnet ist, nachdem seine Relativposition im Ortsbereich der Positionsbestimmungseinrichtung bestimmt wurde und er gemeinsam mit der Drehvorrichtung kalibriert wurde, dazu verwendet, ein Werkstück anzutasten und dadurch Koordinaten des Werkstücks zu ermitteln. Vorzugsweise wird die Kalibrierung unter Verwendung der Positionsbestimmungseinrichtung nach dem Antasten des Werkstücks wiederholt.

Die Erfindung ist nicht auf die Verwendung einer einzigen Positionsbestimmungseinrichtung beschränkt. Z.B. können mehrere derartige Positionsbestimmungseinrichtungen an verschiedenen Orten im Bewegungsbereich des Tasters angeordnet sein. Wenn mit jeder der Positionsbestimmungseinrichtungen zumindest einmal die Relativposition der Drehvorrichtung zu der jeweiligen Positionsbestimmungseinrichtung bestimmt wird, können insbesondere systematische Fehler des KMG, z.B. Bewegungsfehler, ermittelt werden. Bei den Bewegungsfehlern kann es sich z.B. um Rechtwinkligkeitsfehler handeln, d.h. Abweichungen von idealer Weise rechtwinklig zueinander verlaufenden Bewegungsachsen des KMG.

Die Kalibrierung und auch der Betrieb der Drehvorrichtung kann in erheblicher Weise durch Gewichtskräfte von an der Drehvorrichtung angebrachten Vorrichtungen beeinflusst werden, insbesondere einem Messkopf, der an dem letzten Teil der Drehvorrichtung angebracht ist und an dem wiederum z.B. ein Sensor wie ein taktiler Taster angebracht ist. Die Gewichtskraft eines Messkopfes ist jedoch in der Regel wesentlich größer als die des Tasters. Aus verschiedenen Gründen kann es wünschenswert sein, die Drehvorrichtung ohne einen daran angebrachten Messkopf zu kalibrieren. Z.B. kann der Messkopf für den Einsatz an einem anderen KMG benötigt werden. Um die Drehvorrichtung möglichst unter denselben Bedingungen wie beim Einsatz des Messkopfes zu kalibrieren, kann daher statt dem Messkopf ein anderer Gegenstand (ein Ersatzgegenstand) an der Drehvorrichtung angeordnet werden/sein, der dieselbe Masse wie der Messkopf hat. Wenn verschiedene Messköpfe an der Drehvorrichtung betrieben werden können, kann die Kalibrierung mit unterschiedlichen Ersatzgegenständen gleicher Masse nacheinander durchgeführt werden. Z.B. kann an dem jeweiligen Ersatzgegenstand außerdem ein Körper angebracht und damit an der Drehvorrichtung befestigt werden, der zur Gewinnung der Kalibrierungsinformation jeweils in dem Ortsbereich der Positionsbestimmungseinrichtung gebracht wird. Z.B. kann der Körper die Form einer Kugel oder einer Kugelkalotte haben.

Ausführungsbeispiele der Erfindung werden nun unter Bezugnahme auf die beigefügte Zeichnung beschrieben. Die einzelnen Figuren der Zeichnung zeigen:
- Fig. 1: ein Koordinatenmessgerät in Portalbauweise,
- Fig. 2: schematisch eine Seitenansicht einer Positionsbestimmungseinrichtung mit drei Sensoren, deren Bestimmungsrichtungen entsprechend den Koordinatenachsen eines kartesischen Koordinatensystems ausgerichtet sind, wobei sich die Tastkugel eines Taststifts etwa im Kreuzungspunkt der drei Bestimmungsrichtungen befindet,
- Fig. 3: eine Anordnung ähnlich der in Fig. 2, wobei die Positionsbestimmungseinrichtung jedoch zwei zusätzliche Sensoren aufweist, deren Bestimmungsrichtungen sich wie die Koordinatenachsen eines zweidimensionalen kartesischen Koordinatensystems kreuzen, wobei die Bestimmungsrichtungen der beiden zusätzlichen Sensoren parallel über den Bestimmungsrichtungen von zwei der drei anderen Sensoren verlaufen,
- Fig. 4: schematisch eine Seitenansicht einer Basis eines KMG, auf der die Positionsbestimmungseinrichtung aus Fig. 2 und eine Kalibrierkugel angeordnet sind,
- Fig. 5: zwei Sensoren einer Positionsbestimmungseinrichtung, deren Bestimmungsrichtungen einander wie die Koordinatenachsen eines zweidimensionalen kartesischen Koordinatensystems kreuzen, und eine Tastkugel, deren Radius von den Sensoren bestimmt wird,
- Fig. 6: schematisch eine Anordnung ähnlich der in Fig. 2, wobei jedoch ein Taster an der Drehvorrichtung angeordnet ist, dessen Schaft-Längsachse am Tastelement nicht mit der Drehachse der Drehvorrichtung zusammenfällt, und

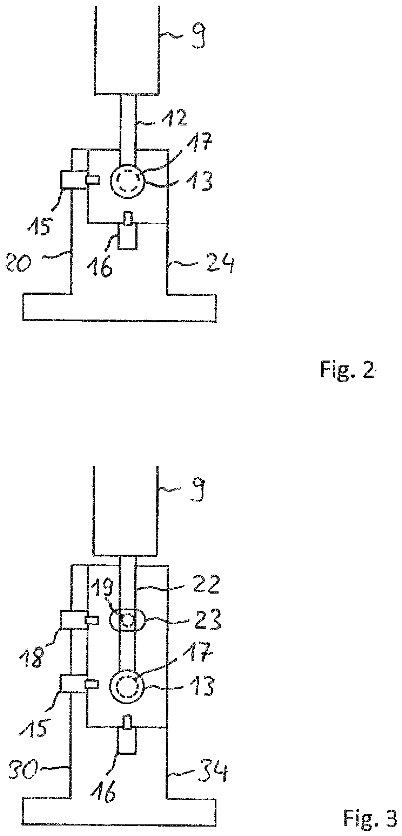

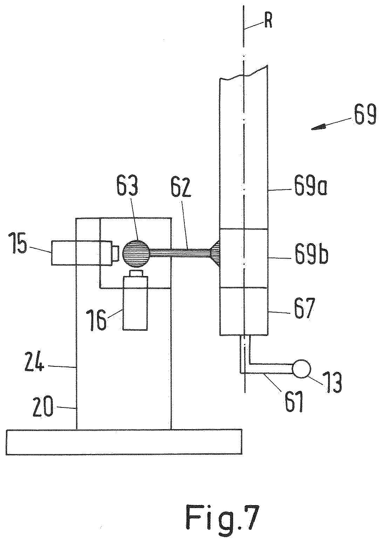

- Fig. 7: schematisch eine Anordnung ähnlich der in Fig. 2, wobei jedoch ein Taster an der Drehvorrichtung angeordnet ist, dessen Schaft-Längsachse abgewinkelt ist, sodass der Abschnitt des Taststiftschaftes an der Tastkugel quer zur Drehachse der Drehvorrichtung verläuft und wobei an dem zweiten Teil der Drehvorrichtung, das relativ zu dem ersten der Drehvorrichtung um die Drehachse der Drehvorrichtung drehbar ist, ein Körper angeordnet ist, der im Ortsbereich der Positionsbestimmungseinrichtung positioniert ist, und außerdem an dem zweiten Teil der Drehvorrichtung ein Messkopf angeordnet ist, über den der Taststift mit dem zweiten Teil verbunden ist.

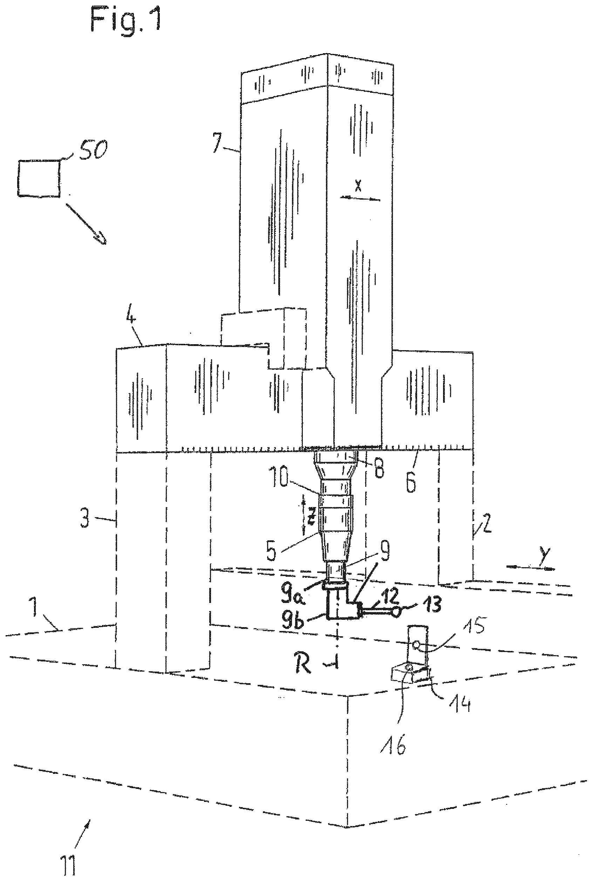

Das in Fig. 1 dargestellte Koordinatenmessgerät (KMG) 11 in Portalbauweise weist eine als Messtisch ausgestaltete Basis 1 auf, über der Säulen 2, 3 in Y-Richtung eines kartesischen Koordinatensystems mit den Koordinatenachsen X-Y-Z beweglich angeordnet sind. Die Säulen 2, 3 bilden zusammen mit einem Querträger 4 ein Portal des KMG 11. Der Querträger 4 ist an seinen gegenüberliegenden Enden mit den Säulen 2 bzw. 3 verbunden. Nicht näher dargestellte Elektromotoren verursachen die Linearbewegung der Säulen 2, 3 in Y-Richtung. Dabei ist z. B. jeder der beiden Säulen 2, 3 ein Elektromotor zugeordnet.

Der Querträger 4 ist mit einem Querschlitten 7 kombiniert, welcher luftgelagert entlang dem Querträger 4 in X-Richtung des kartesischen Koordinatensystems beweglich ist. Die momentane Position des Querschlittens 7 relativ zu dem Querträger 4 kann anhand einer Maßstabsteilung 6 festgestellt werden. Die Bewegung des Querträgers 4 in X-Richtung wird durch einen weiteren Elektromotor angetrieben.

An dem Querschlitten 7 ist eine in vertikaler Richtung bewegliche Pinole 8 gelagert, die an ihrem unteren Ende über eine Montageeinrichtung 5, 10 mit einer Drehvorrichtung 9 verbunden ist. An der Drehvorrichtung 9 ist ein Taststift 12 auswechselbar angeordnet, der an seinem freien Ende eine Tastkugel 13 als Tastelement zum taktilen Antasten von Objekten aufweist. Die Drehvorrichtung 9 weist einen ersten Teil 9a und einen zweiten Teil 9b auf, die relativ zueinander um eine Drehachse R der Drehvorrichtung 9 drehbar sind. Insbesondere in dem Übergangsbereich des zweiten Teils 9b zu dem Taststift 12 kann ein nicht näher dargestellter Messkopf angeordnet sein, der eine Auslenkung des Taststifts 12 aus seiner Ruhelage misst. Die Pinole 8 kann angetrieben durch einen weiteren Elektromotor relativ zu dem Querschlitten 7 in Z-Richtung des kartesischen Koordinatensystems bewegt werden. Durch die im Ausführungsbeispiel insgesamt vier Elektromotoren kann der Taststift 12 daher zu jedem Punkt unterhalb des Querträgers 4 und oberhalb der Basis 1 verfahren werden, der in dem durch die Säulen 2, 3 definierten Zwischenraum liegt.

Außerdem weist die Drehvorrichtung 9 die erwähnte Drehbeweglichkeit um die Drehachse R auf. Daher kann nicht nur die Position der Tastkugel 13 durch geradlinige Bewegung in den Richtungen X, Y, Z positioniert werden, sondern auch die Ausrichtung der Längsachse des Taststiftschaftes 12 eingestellt werden. In dem dargestellten Ausführungsbeispiel verläuft die Drehachse R in Z-Richtung und verläuft die Längsachse des Taststiftschaftes 12 in der X-Y-Ebene. Es sind jedoch andere Ausgestaltungen möglich. Z.B. kann die Drehachse der Drehvorrichtung anders ausgerichtet sein. Alternativ oder zusätzlich kann die Längsachse des Taststiftes anders ausgerichtet sein. Ferner alternativ oder zusätzlich kann die Drehvorrichtung zwei oder mehr Drehachsen haben, die insbesondere kinematisch seriell zueinander angeordnet sind. Gemäß einem Ausführungsbeispiel kann die erste Drehachse in Z-Richtung des in Fig. 1 dargestellten Koordinatenmessgeräts verlaufen und die zweite Drehachse in der X-Y-Ebene verlaufen. Z.B. ist ein Taststift in diesem Fall so an der Drehvorrichtung angeordnet, dass seine Taststiftlängsachse nicht in Richtung der zweiten Drehachse verläuft. Dies ermöglicht es, die Taststiftlängsachse durch Drehung um die erste und zweite Drehachse unterschiedlich auszurichten.

Das KMG 11 weist ein in Fig. 1 nicht näher dargestelltes Messsystem auf, um die momentane Bewegungsposition der Säulen 2, 3 in Y-Richtung, des Querschlittens 7 in X-Richtung und der Pinole 8 in Z-Richtung zu messen. Von dem Messsystem ist lediglich die Maßstabsteilung 6 dargestellt, welche sich entlang dem Querträger in X-Richtung erstreckt. Z.B. ist in dem Querschlitten 7 zumindest ein Lesekopf angeordnet, der mit der Maßstabsteilung zusammenwirkt und die Bestimmung der Position des Querschlittens 7 in X-Richtung ermöglicht. Entsprechende Maßstabsteilungen und Leseköpfe können auch zur Bestimmung der Position der Säulen 2, 3 in Y-Richtung und zur Bestimmung der Position der Pinole 8 relativ zu dem Querschlitten 7 in Z-Richtung vorgesehen sein.

Dies ist lediglich ein Beispiel für ein KMG, das ein bewegliches Teil aufweist, an dem eine Drehvorrichtung angeordnet ist. Andere Beispiele sind KMG in Gantry-Bauweise und KMG mit einem beweglichen Messtisch. Zwar wird in diesem Fall lediglich der Messtisch aktiv bewegt. Dies führt jedoch ebenfalls zu einer Relativbewegung des Tasters zu dem Messtisch, zu einem darauf angeordneten zu vermessenden Werkstück und zu einer darauf angeordneten Positionsbestimmungseinrichtung.

Beispielsweise durch Kalibrierung des Taststifts 12 an einer in Fig. 1 nicht dargestellten Kalibrierkugel kann die Position des Mittelpunkts der Tastkugel 13 relativ zu der Pinole 8 ermittelt werden. Bei der Kalibrierung kann die Drehvorrichtung in verschiedene Drehpositionen gebracht werden, wodurch sich die Ausrichtung des Taststifts 12 ändert. Eine andere Möglichkeit besteht darin, den Taststift ohne Verwendung der Drehvorrichtung zu Kalibrieren. Zum Beispiel kann die Drehvorrichtung von der Pinole abgekoppelt werden und stattdessen der Taststift unmittelbar an der Pinole angekoppelt werden. Alternativ oder zusätzlich kann vorab bekannte Information über die Abmessungen der an der Pinole 8 angeordneten Teile (einschließlich der Drehvorrichtung) benutzt werden, um den Mittelpunkt der Tastkugel 13 relativ zur Pinole 8 festzustellen.

Die Bestimmung der Position des Mittelpunktes der Tastkugel 13 relativ zu der Pinole stellt jedoch nur eine mögliche Art der Kalibrierung des Tasters 12 dar. Alternativen bestehen z.B. darin, dass durch Kalibrierung die Position eines anderen Punktes des Tasters 12 (z.B. ein bestimmter Oberflächenpunkt der Tastkugel 13) ermittelt wird. Ferner kann die Kalibrierung lediglich zu dem Zweck ausgeführt werden, bestehende VorabInformation über die Geometrie, die Position und/oder Ausrichtung des Tasters zu überprüfen und gegebenenfalls zu korrigieren. Bei der Vorabinformation kann es sich insbesondere auch um das Ergebnis einer früheren Kalibrierung handeln. Weiterhin muss die Position des Mittelpunkts der Tastkugel oder die Position eines anderen bestimmten Punktes des Tasters nicht in Bezug auf die Pinole bestimmt werden, sondern kann z.B. in Bezug auf einen bestimmten Punkt der Basis (z.B. den Ursprung des Koordinatensystems des KMG) bestimmt werden.

Schematisch ist durch ein Rechteck in Fig. 1 eine Steuerung 50 des KMG 11 dargestellt, die den Betrieb des KMG 11 steuert und insbesondere die Bewegung des beweglichen Teils (hier z. B. der Pinole 8) steuert, an dem die Drehvorrichtung 9 angebracht ist. Die Steuerung (z.B. eine Recheneinheit mit Datenprozessor) kann auch die Funktion der Kalibrierungseinrichtung erfüllen, die aus den von der Positionsbestimmungseinrichtung 14 und von dem Messsystem des KMG 11 gewonnenen Informationen die Drehvorrichtung 9 und optional auch den Taster für den weiteren Betrieb kalibriert.

In der Nähe des rechts in Fig. 1 dargestellten Randes der Basis 1 ist eine Positionsbestimmungseinrichtung 14 auf der Basis 1 angeordnet. In dem dargestellten Ausführungsbeispiel weist die Positionsbestimmungseinrichtung 14 zwei Sensoren 15, 16 auf, mit denen die Relativposition des an der Drehvorrichtung 9 angebrachten Tasters 12 oder eines anderen an der Drehvorrichtung 9 angeordneten Körpers oder unmittelbar eines Teils der Drehvorrichtung relativ zu der Positionsbestimmungseinrichtung 14 bestimmbar ist. Zum Beispiel kann unmittelbar an den zweiten Teil einer Drehvorrichtung mit einer einzigen Drehachse ein Körper angebracht sein, entweder anstelle des Tasters/Sensors oder zusätzlich zu dem Taster/Sensor. Im Folgenden wird die Gewinnung von Kalibrierungsinformation zur Kalibrierung der Drehvorrichtung 9 beschrieben, wobei der Taster 12 an der Drehvorrichtung 9 angeordnet ist und die Tastkugel 13 des Tasters 12 in den Ortsbereich der Positionsbestimmungseinrichtung 14 gebracht wird. Alternativ kann wie zuvor erwähnt ein Teil der Drehvorrichtung oder ein anderer mit der Drehvorrichtung verbundener Körper in den Ortsbereich gebracht werden, um die Kalibrierungsinformation zu gewinnen.

Der in einem seitlich nach oben ragenden Teil der Positionsbestimmungseinrichtung 14 angeordnete erste Sensor 15 ist z.B. so ausgestaltet, dass er den Abstand in X-Richtung zu einem in seiner Nähe angeordneten Teil und damit zu der Tastkugel 13 messen kann, wenn sich die Tastkugel 13 im Ortsbereich neben dem ersten Sensor 15 und über dem zweiten Sensor 16 befindet, welcher in einen Sockel der Positionsbestimmungsvorrichtung 14 integriert ist. Der zweite Sensor 16 ist ausgestaltet, den Abstand eines über ihm angeordneten Teils in Z-Richtung zu bestimmen.

Eine andere Positionsbestimmungseinrichtung kann zusätzlich zu dem ersten Sensor 15 und dem zweiten Sensor 16 einen dritten Sensor (z. B. in einem weiteren seitlich nach oben ragenden Teil) aufweisen, der ausgestaltet ist, den Abstand eines in seiner Nähe angeordneten Teils in Y-Richtung zu messen. Dabei kreuzen sich die Bestimmungsrichtungen der drei Sensoren (und im Fall der Positionsbestimmungseinrichtung 14 der zwei Sensoren 15, 16) möglichst nahe an einem gemeinsamen Punkt. In der Praxis wird es jedoch in der Regel keinen gemeinsamen Schnittpunkt geben. Vielmehr werden die Bestimmungsrichtungen der verschiedenen Sensoren in möglichst geringem Abstand aneinander vorbei verlaufen, wie es bei windschiefen Geraden der Fall ist. Bevorzugt wird daher, dass die Bestimmungsrichtung der einzelnen Sensoren durch Kalibrierung ermittelt wird. Z.B. kann ein Kalibrierkörper in Form einer Kugel oder einer Kugelkalotte quer zur Bestimmungsrichtung bewegt werden und die Position des Kalibrierkörpers ermittelt werden, in der der Abstand zu dem Sensor minimal ist, dessen Bestimmungsrichtung kalibriert werden soll. In dieser Position verläuft die Bestimmungsrichtung senkrecht zur Oberfläche der Kugel oder Kugelkalotte. Z. B. ein für die Kalibrierung genutztes Messsystem, das nicht den Sensor oder die Sensoren der Positionsbestimmungseinrichtung nutzt, liefert die Position des Kalibrierkörpers und daher gemeinsam mit dem Bestimmungsergebnis des Sensors die Lage der Bestimmungsrichtung des Sensors. Sobald die Bestimmungsrichtung für jeden der Sensoren ermittelt ist, kann z.B. auch ermittelt werden, wie genau die Bestimmungsrichtungen sich in einem Punkt schneiden bzw. wie groß die verbleibenden Abstände der entsprechenden Geraden im Raum sind. Alternativ oder zusätzlich zu der Kalibrierung können die Bestimmungsrichtungen der Sensoren justiert werden, sodass sie sich in einem gemeinsamen Schnittpunkt schneiden oder möglichst nahe an einem gemeinsamen Punkt vorbeilaufen.

Bei der in Fig. 2 dargestellten Positionsbestimmungseinrichtung handelt es sich z.B. um eine Abwandlung der Positionsbestimmungseinrichtung 14 aus Fig. 1, die drei Sensoren zur Bestimmung der Relativposition einer Drehvorrichtung oder eines damit verbundenen Körpers (insbesondere einer Tastkugel) hat. Eine Halterung 20 hält die drei Sensoren 15, 16, 17, sodass deren Bestimmungsrichtungen im Wesentlichen unveränderlich im Raum verlaufen. Ein erster Sensor 15 ist in einem seitlich nach oben ragenden Teil der Halterung 20 gehalten, sodass sich seine Bestimmungsrichtung horizontal von rechts nach links in der Bildebene erstreckt. Ein zweiter Sensor 16 ist an einer tieferen Position von der Halterung 20 gehalten. Seine Bestimmungsrichtung verläuft in vertikaler Richtung in der Bildebene. Ein dritter Sensor 17 ist in Fig. 2 lediglich durch einen gestrichelten Kreis angedeutet. Er wird von einem hinter der Tastkugel 13 des dargestellten Taststifts 12 nach oben ragenden Bereich der Halterung 20 gehalten. Seine Bestimmungsrichtung erstreckt sich senkrecht zur Figurenebene. Die drei Bestimmungsrichtungen der Sensoren 15, 16, 17 kreuzen sich annähernd in einem gemeinsamen Punkt, der als Schnittpunkt der drei den Bestimmungsrichtungen entsprechenden kartesischen Koordinatenachsen betrachtet werden kann.

In Fig. 2 ist schematisch eine Drehvorrichtung 9 eines Koordinatenmessgerätes dargestellt, an der ein Taststift 12 (z. B. der Taststift 12 aus Fig. 1) angeordnet ist. In dem dargestellten Beispiel verläuft die Längsachse des Taststiftschaftes in vertikaler Richtung. Insbesondere wenn die Drehvorrichtung 9 zumindest zwei Drehachsen hat, kann die Längsachse des Taststiftschaftes in nahezu beliebigen Richtungen orientiert sein, je nach Drehposition der Drehvorrichtung. Die Tastkugel 13 könnte daher z.B. in der Darstellung von Fig. 2 von dem Taststiftschaft gehalten werden, der von rechts oder von vorne zu dem Ortsbereich der Positionsbestimmungseinrichtung verläuft.

Entsprechendes gilt grundsätzlich auch für die in Fig. 3 dargestellte Variante einer Positionsbestimmungseinrichtung 34, die jedoch auch dazu geeignet ist, die Ausrichtung des Tasters oder eines anderen Körpers zu bestimmen, der in ihrem Ortsbereich angeordnet ist. Wenn sich die Drehvorrichtung in anderen Drehpositionen als in Fig. 3 dargestellt befindet, kann bei einer optionalen Ausgestaltung der Anordnung auch die Positionsbestimmungseinrichtung 34 von einer nicht in Fig. 3 dargestellten weiteren Drehvorrichtung so gedreht werden, dass eine Bestimmung der Ausrichtung möglich ist.

Die Positionsbestimmungseinrichtung 34 weist fünf Sensoren 15, 16, 17, 18, 19 zum Bestimmen der Relativposition einer Drehvorrichtung, eines Tasters oder eines anderen an der Drehvorrichtung angeordneten Körpers relativ zu der Positionsbestimmungseinrichtung 34 auf. Im unteren Bereich der Darstellung gleicht die Positionsbestimmungseinrichtung 34 der in Fig. 2 dargestellten Positionsbestimmungseinrichtung 24. Die nach oben ragenden Teile der Halterung 30 erstrecken sich jedoch weiter nach oben als im Fall der Fig. 2. Über dem ersten Sensor 15 wird in dem seitlich nach oben ragenden Teil der Halterung 30 ein vierter Sensor 18 gehalten, dessen Bestimmungsrichtung sich parallel und vertikal oberhalb der Bestimmungsrichtung des ersten Sensors 15 erstreckt. In dem hinter dem Taststift 22 nach oben ragenden Teil der Halterung 30 ist ein fünfter Sensor 19 oberhalb des dritten Sensors 17 angeordnet, wobei sich die Bestimmungsrichtung des fünften Sensors 19 parallel und vertikal oberhalb der Bestimmungsrichtung des dritten Sensors 17 erstreckt. Die Bestimmungsrichtungen des vierten Sensors 18 und des fünften Sensors 19 kreuzen einander an einem Kreuzungspunkt, der vertikal oberhalb des Kreuzungspunktes der Bestimmungsrichtungen des ersten Sensors 15 und des dritten Sensors 17 liegt.

Während der erste Sensor 15, der zweite Sensor 16 und der dritte Sensor 17 dazu verwendet werden, einen ersten Teil eines Körpers bezüglich seiner Relativposition zu den einzelnen Sensoren 15, 16, 17 zu bestimmen (im Ausführungsbeispiel ist der erste Teil die Tastkugel 13 des Taststifts 22), werden der vierte Sensor 18 und der fünfte Sensor 19 dazu verwendet, einen zweiten Teil desselben Körpers bezüglich seiner Relativposition zu den Sensoren 18, 19 zu bestimmen. Im Ausführungsbeispiel weist der dargestellte Taststift 22 im Kreuzungspunkt der Bestimmungsrichtungen des vierten Sensors 18 und des fünften Sensors 19 einen ringförmigen Wulst 23 mit im Querschnitt halbkreisförmiger, außen um den Schaft des Taststifts 22 umlaufender Querschnittsfläche auf. Der dargestellte Taststift 22 wird wiederum von der Taststifthalterung 9 des KMG gehalten.

Die Positionsbestimmungseinrichtung 34 ermöglicht es daher, nicht nur die Relativposition des Tasters, sondern auch dessen Ausrichtung im Raum zu bestimmen. Ferner kann eine Längenänderung des Taststift-Schaftes gegenüber einer früheren Messung selbständig von der Positionsbestimmungseinrichtung 34 bestimmt werden. Hierzu wird z.B. die Position des Mittelpunktes des Taststifts 13 und der Mittelpunkt des ringförmigen Wulstes 23 bestimmt. Dazu kann der Taststift 22 in vertikaler Richtung bewegt werden, sodass z.B. zunächst der Tastkugel-Mittelpunkt im Kreuzungspunkt des ersten, zweiten und dritten Sensors 15, 16, 17 positioniert wird und danach der Mittelpunkt des ringförmigen Wulstes 23 im Kreuzungspunkt der Bestimmungsrichtungen des vierten und des fünften Sensors 18, 19 positioniert wird. Alternativ kann der Tastkugel-Mittelpunkt lediglich ungefähr im Kreuzungspunkt der Bestimmungsrichtungen der unteren drei Sensoren 15, 16, 17 angeordnet werden und gleichzeitig der Mittelpunkt des ringförmigen Wulstes 23 lediglich ungefähr im Kreuzungspunkt der oberen beiden Sensoren 18, 19 angeordnet werden. In diesem Fall ist damit zu rechnen, dass die Bestimmungsrichtungen der Sensoren nicht exakt senkrecht zu der jeweiligen kugelförmigen Oberfläche der Tastkugel 13 bzw. des ringförmigen Wulstes 23 verlaufen. Für die Bestimmung der Positionen der Mittelpunkte können optional Vorkenntnisse über die Geometrie des Taststiftes verwendet werden.

Unter Verwendung der Positionsbestimmungseinrichtung kann auf einfache Weise und mit geringem Zeitaufwand die thermische Drift eines KMG bestimmt werden und können die Auswirkungen der thermischen Drift korrigiert und insbesondere kompensiert werden. Unter der thermischen Drift wird die Veränderung der Geometrie des KMG verstanden, die auf Temperaturänderungen zurückzuführen ist. Z.B. kann die thermische Drift für jeden Punkt des KMG dadurch angegeben werden, dass die Veränderung der Position des Punktes in einem ortsfesten Koordinatensystem angegeben wird. Insbesondere ist es möglich, den Ursprung dieses Koordinatensystems an einen Ort der Positionsbestimmungseinrichtung zu legen, z.B. den Kreuzungspunkt von drei Sensoren, deren Bestimmungsrichtungen einander im Wesentlichen genau in einem gemeinsamen Kreuzungspunkt kreuzen.

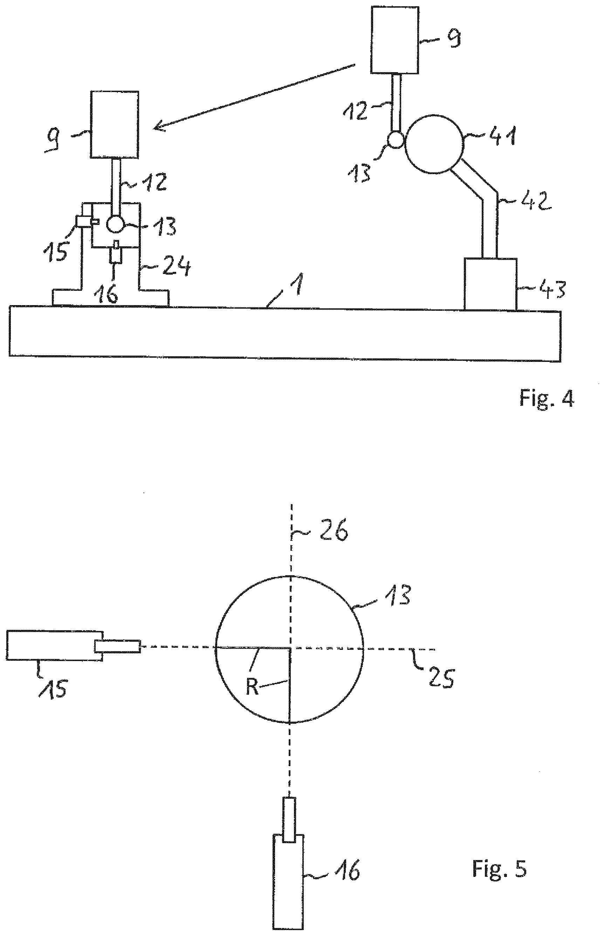

Anhand von Fig. 4 wird nun ein Ausführungsbeispiel eines Verfahrens und einer Anordnung zur Bestimmung der thermischen Drift beschrieben. Fig. 4 zeigt auf der Basis 1 eine Positionsbestimmungseinrichtung 24, insbesondere die Positionsbestimmungseinrichtung 24 aus Fig. 2, und eine an einer Halterung mit Sockel 43 und Arm 42 gehaltenen Kalibrierkugel 41. Von dem KMG ist lediglich die Drehvorrichtung 9 mit dem von ihr gehaltenen Taststift 12 an zwei verschiedenen Orten dargestellt, nämlich an einem ersten Ort, an dem die Tastkugel 13 des Taststifts 12 die Oberfläche der Kalibrierkugel 41 antastet, und an einem zweiten Ort, an dem sich die Tastkugel 13 im Ortsbereich (Messbereich) der Positionsbestimmungseinrichtung 24 befindet. Abhängig von der Drehposition der Drehvorrichtung 9 kann die Längsachse des Taststiftschaftes auch anders als in Fig. 4 dargestellt ausgerichtet sein.

Beispielsweise während der Aufwärmphase nach dem Einschalten des KMG wird insbesondere bei verschiedenen Drehposition in der Drehvorrichtung 9 (und damit insbesondere bei verschiedenen Ausrichtungen des Taststiftschaftes) mit dem Taststift 12 sowohl eine Mehrzahl von Oberflächenpunkten der Kalibrierkugel 41 angetastet und aus den Antastergebnissen insbesondere die Position des Mittelpunktes der Kalibrierkugel 41 ermittelt, als auch der Taststift insbesondere mit seiner Tastkugel 13 in den Ortsbereich der Positionsbestimmungseinrichtung 24 gebracht. Insbesondere wird die Drehvorrichtung 9 (und optional auch der Taststift 12) aus dem Messergebnis der Antastung der Kalibrierkugel 41 in an sich bekannter Weise mit hoher Genauigkeit kalibriert und bildet eine Bestimmung der Relativposition oder die mehrfache Bestimmung der Relativposition des Tasters 12 unter Verwendung der Positionsbestimmungseinrichtung 24 eine Referenz für die folgende Bestimmung der thermischen Drift während der weiteren Aufwärmphase des KMG oder während eines Betriebes des KMG. Wenn die Auswirkungen der thermischen Drift im weiteren Lauf der Zeit bestimmt werden sollen, wird der Taster 12 wieder insbesondere mit seiner Tastkugel 13 in den Ortsbereich der Positionsbestimmungseinrichtung 24 gebracht und wird die Relativposition des Tasters 12 zu der Positionsbestimmungseinrichtung 24 bestimmt. Insbesondere bei gleicher Drehposition der Drehvorrichtung, werden Veränderungen der Relativposition und/oder der Position des Tasters 12 gemäß dem Messsystem des KMG in Bezug zu den Messergebnissen der erwähnten Referenz gesetzt. Wenn sich z.B. die Position des Tastkugel-Mittelpunktes gegenüber der Referenz um 0,5 µm verändert hat, kann diese Veränderung als Ergebnis der thermischen Drift aufgefasst werden und z.B. eine entsprechende Korrektur beim Betrieb des KMG vorgenommen werden. Alternativ oder zusätzlich kann insbesondere in der Aufwärmphase des KMG die Veränderung aufgrund der thermischen Drift mehrfach in der genannten Weise festgestellt werden und kann der Betrieb des KMG erst dann freigegeben werden, wenn die thermische Drift zu keinen weiteren erheblichen Veränderungen der Position der Drehvorrichtung führt. Z.B. kann ein Grenzwert für die Positionsänderung des Tasters oder der Drehvorrichtung aufgrund der thermischen Drift pro Zeitintervall vorgegeben werden. Sobald dieser Grenzwert unterschritten wird, kann der Betrieb des KMG freigegeben werden. Alternativ oder zusätzlich kann die Positionsänderung oder eine andere unter Verwendung der Positionsbestimmungseinrichtung ermittelte Größe zunächst mehrfach als mathematische Funktion der Zeit bestimmt werden und dann der weitere Verlauf dieser mathematischen Funktion in die Zukunft extrapoliert werden. Auch daraus kann ermittelt werden, wann mit ausreichend konstanten Betriebsbedingungen für einen genauen Messbetrieb des KMG zu rechnen ist. Z.B. kann auch bei dieser Ermittlung der genannte vorgegebene Grenzwert herangezogen werden.

Ferner alternativ oder zusätzlich kann bei einer unter Verwendung der Positionsbestimmungseinrichtung festgestellten thermischen Drift, die ein vorgegebenes Kriterium erfüllt (z.B. wenn ein vorgegebener Grenzwert der Positionsänderung des Tasters pro Zeitintervall überschritten wird), eine Kalibrierung der Drehvorrichtung auf andere Weise als unter Verwendung der Positionsbestimmungseinrichtung allein (z.B. durch erneutes Antasten mehrerer Oberflächenpunkte der Kalibrierkugel 41) ausgelöst werden. Gemäß einer Variante dieser Vorgehensweise wird die Häufigkeit der Wiederholung der Kalibrierung der Drehvorrichtung auf andere Weise als unter Verwendung der Positionsbestimmungseinrichtung allein abhängig von dem Ergebnis der Positionsbestimmung durch die Positionsbestimmungseinrichtung festgelegt.

Umgekehrt kann das Eintreten vorgegebener Ereignisse eine Positionsbestimmung der Drehvorrichtung unter Verwendung der Positionsbestimmungseinrichtung auslösen. Z.B. kann eine solches vorgegebenes Ereignis darin bestehen, dass sich zumindest eine Messgröße aus der Überwachung der Umgebung des KMG in vorgegebener Weise verändert hat. Z.B. wird die Temperatur der Umgebung des KMG überwacht und besteht das Ereignis darin, dass sich die Temperatur um einen vorgegebenen Betrag gegenüber einem früheren Zeitpunkt verändert hat. Alternativ oder zusätzlich wird die Umgebungstemperatur an mehreren Stellen gemessen und besteht das Ereignis darin, dass zwischen den verschiedenen Temperaturmesspositionen ein Temperaturunterschied festgestellt wird, der größer als ein vorgegebener Grenzwert ist. Ein weiteres mögliches Ereignis besteht darin, dass eine unbeabsichtigte Kollision der Drehvorrichtung oder des Tasters mit einem Objekt im Bewegungsbereich des Tasters stattgefunden hat.

Eine für die Kalibrierung eines Tasters mit einer Tastkugel als Tastelement wichtige Größe ist der Tastkugel-Radius. Entsprechendes gilt für einen kugelförmigen Körper, der mit der Drehvorrichtung verbunden ist und der zur Gewinnung von Kalibrierungsinformation in den Ortsbereich der Positionsbestimmungseinrichtung gebracht werden soll. Insbesondere mit zumindest zwei Sensoren der Positionsbestimmungseinrichtung mit Bestimmungsrichtungen entsprechend einem kartesischen Koordinatensystem (vorzugsweise mit drei solchen Sensoren) kann der Kugelradius in einfacher Weise und mit geringem Zeitaufwand ermittelt werden, wie am Beispiel von Fig. 5 näher erläutert wird. Das Ausführungsbeispiel der Fig. 5 zeigt den Fall von lediglich zwei Sensoren 15, 16 derselben Positionsbestimmungseinrichtung. Alternativ könnte ein dritter Sensor Teil der Positionsbestimmungseinrichtung sein, wobei seine Bestimmungsrichtung senkrecht zu den Bestimmungsrichtungen der beiden anderen Sensoren 15, 16 verläuft und diese im Wesentlichen genau an deren Kreuzungspunkt schneidet.

Die Bestimmungsrichtung 25 des ersten Sensors 15 und die Bestimmungsrichtung 26 des zweiten Sensors 16 sind in Fig. 5 durch gestrichelte Linien dargestellt. Sie kreuzen sich in dem dargestellten Zustand im Mittelpunkt der Tastkugel 13. Ferner ist entlang der beiden Bestimmungsrichtungen 25, 26 jeweils der Tastkugelradius R dargestellt. Um die dargestellte Relativposition der Tastkugel 13 zu den Sensoren 15, 16 zu erreichen, kann die Tastkugel 13 von dem nicht in Fig. 5 dargestellten KMG bewegt werden, bis die Position erreicht ist. Insbesondere kann eine Bewegung entlang einer Spiralbahn ausgeführt werden oder kann die Tastkugel quer zu lediglich einer der Bestimmungsrichtungen 25, 26 bewegt werden, bis die Bestimmungsrichtung den Tastkugel-Mittelpunkt durchquert, und kann danach in gleicher Weise für die weitere Bestimmungsrichtung oder die weiteren Bestimmungsrichtungen verfahren werden.

Wenn die dargestellte Relativposition erreicht ist, ist der Abstand, den der jeweilige Sensor 15, 16 zur Oberfläche der Tastkugel 13 bestimmt, ein Maß für den Tastkugelradius R. Da der Kreuzungspunkt der Bestimmungsrichtungen 25, 26 bekannt ist und sich die Tastkugel 13 mit ihrem Mittelpunkt an dem Kreuzungspunkt befindet, muss von dem bekannten Abstand des Tastkugelmittelpunktes jeweils der Messwert des Abstandes zur Kugeloberfläche abgezogen werden, um den Tastkugelradius R zu erhalten. Da der Tastkugelradius bei realen Tastkugeln nicht konstant ist (d.h. die Kugel ist keine ideale Kugel), können sich aus den Messwerten der einzelnen Sensoren 15, 16 unterschiedliche Tastkugelradien ergeben.

Wenn der Tastkugelradius bekannt ist, kann er z.B. bei einer nachfolgenden Kalibrierung des Tasters verwendet werden. Alternativ kann der Tastkugelradius aber insbesondere durch Antastung eines Kalibrierkörpers ermittelt werden.

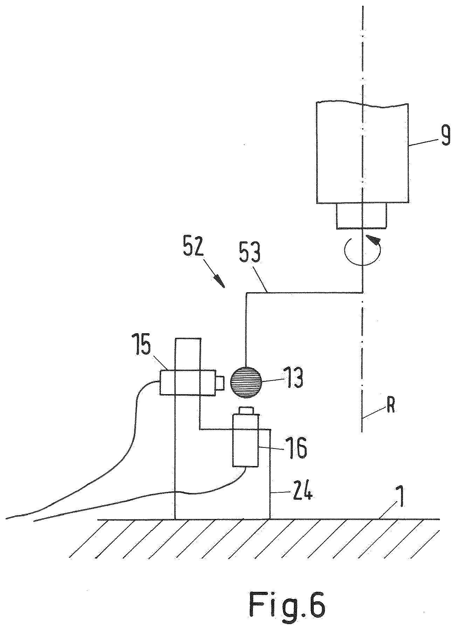

Fig. 6 zeigt ähnlich wie Fig. 2 eine Drehvorrichtung mit einem daran angeordneten Taststift 52, der jedoch einen Taststiftschaft 53 mit zweifach abgewinkeltem Verlauf aufweist. Der an der Tastkugel 13 des Taststifts 52 angebrachte Abschnitt des Taststiftschaftes 53 verläuft in dem Ausführungsbeispiel parallel zu der Drehachse R der Drehvorrichtung 9, seine Längsachse fällt aber nicht mit der Drehachse R zusammen. Bei Drehung der Drehvorrichtung 9 um die Drehachse R verändert die Längsachse des genannten Schaft-Abschnitts daher ihre Position nicht aber ihre Ausrichtung. Wenn daher die Tastkugel 13 in verschiedenen Drehpositionen der Drehvorrichtung 9 jeweils in den Ortsbereich der Positionsbestimmungseinrichtung 24 gebracht wird und die Position der Tastkugel 13 bestimmt wird, wird Kalibrierungsinformation zur Kalibrierung der Drehvorrichtung gewonnen, wodurch auch Bewegungsfehler der Drehvorrichtung (z. B. aufgrund einer Änderung der Ausrichtung der Drehachse) korrigiert werden können. Um die Tastkugel 13 bei den verschiedenen Drehpositionen jeweils in den Ortsbereich zu bringen, wird entweder die Position der Drehvorrichtung 9 verändert (dies wird bevorzugt) oder die Position der Positionsbestimmungseinrichtung 24 verändert.

Aus der oben bereits erwähnten EP 1 624 282 A2 ist z.B. ein mathematisches Rechenmodell bekannt, mit der eine Korrektureinheit Fehler einer Dreh-/ Schwenkeinrichtung (d.h. einer zweiachsigen Drehvorrichtung) korrigieren kann. Insbesondere ist die Gleichung eines derartigen Korrekturmodells als Gleichung 3 in Absatz 26 der genannten Druckschrift angegeben. Die Gleichung und damit das Rechenmodell enthält für jede der Drehachsen des Gelenks den Abstandsvektor von einem Punkt auf der jeweiligen Drehachse zum Tastkugelmittelpunkt eines an dem Gelenk angebrachten Tasters. Diese Vektoren werden bei einer gleichzeitigen Kalibrierung der Drehvorrichtung und des an der Drehvorrichtung angebrachten Tasters jeweils individuell für den angebrachten Taster auf Basis der Kalibrierungsinformation berechnet.

Bisher wurde die Drehvorrichtung zur Gewinnung der Kalibrierungsinformation in verschiedene Drehpositionen gebracht und jeweils in dieser Drehposition ein Kalibrierkörper wie beispielsweise die in Fig. 4 dargestellte Kalibrierkugel 41 an mehreren Oberflächenpunkten angetastet. Typischerweise werden hierfür zwölf verschiedene Drehpositionen bezüglich derselben Drehachse der Drehvorrichtung eingestellt und für jede Drehposition mindestens sechs Oberflächenpunkte des Kalibrierkörpers angetastet. Der Zeitaufwand für diesen Vorgang liegt in der Größenordnung von 3 bis 5 Minuten.

Gemäß der Erfindung reicht es unter Verwendung der Positionsbestimmungseinrichtung aus, wenn die Tastkugel in jeder der Drehpositionen in den Ortsbereich der Positionsbestimmungseinrichtung gebracht wird und die Position der Tastkugel bestimmt wird. Der Vorgang der Aufnahme der Kalibrierungsinformation dauert daher lediglich einige Sekunden. Insbesondere wird jeweils die Positionsbestimmungseinrichtung 24 aus Fig. 2 und Fig. 4 verwendet, die drei Sensoren mit Bestimmungsrichtungen aufweist, die entlang den Achsen eines kartesischen Koordinatensystems verlaufen.

Mit der so gewonnenen Kalibrierungsinformation können in analoger Weise wie nach der Antastung von Oberflächenpunkten eines Kalibrierkörpers die zu bestimmenden Parameter des Modells berechnet werden. Insbesondere die genannten Abstandsvektoren von dem jeweiligen Punkt auf der Drehachse der Drehvorrichtung zum Mittelpunkt der Tastkugel können aus der Kalibrierungsinformation berechnet werden. Diese Berechnung kann sogar auf einfachere Weise durchgeführt werden, wenn die Position der Tastkugel bestimmt wird, während sich der Mittelpunkt der Tastkugel z.B. bei der einen Variante der oben beschriebenen Vorgehensweise immer an einem vorgegebenen Punkt in Bezug auf die Positionsbestimmungseinrichtung befindet.

Alternativ zu der Gewinnung der Kalibrierungsinformation bei denselben Drehpositionen wie früher bei der Antastung von mehreren Oberflächen eines Kalibrierkörpers kann die Tastkugel in mehr Drehpositionen als früher in den Ortsbereich der Positionsbestimmungseinrichtung gebracht werden und ihre Position bestimmt werden. Dadurch lässt sich die Genauigkeit der Kalibrierung verbessern.

Fig. 7 zeigt eine Anordnung ähnlich der in Fig. 2. Insbesondere kann die Positionsbestimmungseinrichtung 24 mit der Halterung 20 und den Sensoren 15, 16 und 17 so ausgestaltet sein, wie in Fig. 2 dargestellt und anhand von Fig. 2 beschrieben.

Als Teil des KMG ist in Fig. 7 lediglich die Drehvorrichtung 69 dargestellt, welche an dem in Fig. 7 nicht dargestellten beweglichen Teil des KMG angebracht ist. Die Drehvorrichtung 69 weist ein erstes Teil 69a und ein zweites Teil 69b auf, welches relativ zu dem ersten Teil 69a um die im Ausführungsbeispiel in vertikaler Richtung verlaufende Drehachse R der Drehvorrichtung 69 drehbar ist. Das zweite Teil 69b befindet sich in dem Ausführungsbeispiel unterhalb des ersten Teils 69a. Wiederum unterhalb des zweiten Teils 69b befindet sich ein Messkopf 67, der an dem zweiten Teil 69b drehfest (d.h. nur gemeinsam mit dem zweiten Teil 69b um die Drehachse R drehbar) angebracht ist. Ferner ist an dem Messkopf 67 drehfest ein Taststift 61 angeordnet, dessen Schaft sich ausgehend von dem Messkopf 67 zunächst mit seiner Längsachse in vertikaler Richtung nach unten erstreckt und dann abknickt und mit seiner Längsachse 90° abgewinkelt zur Vertikalen verläuft. Am freien Ende des Schaftes befindet sich eine Tastkugel 13 zum taktilen Antasten von Objekten insbesondere zur Bestimmung von Koordinaten des jeweils angetasteten Oberflächenpunkts des Objekts. Da sowohl der Messkopf 67 als auch der Taststift 61 drehfest an dem zweiten Teil 69b angebracht sind, führt eine Drehung des zweiten Teils 69b relativ zu dem ersten Teil 69a um die Drehachse R zu einer Drehung der Längsachse des Taststiftschaftes in dem abgewinkelten Abschnitt des Schaftes um die Drehachse R. Bezogen auf das in Fig. 1 dargestellte Koordinatensystem bedeutet dies, dass diese Längsachse in der X-Y-Ebene verläuft und innerhalb dieser Ebene um die senkrecht zu dieser Ebene verlaufende Drehachse R gedreht wird.

An dem zweiten Teil 69b ist ferner über einen Schaft 62 ein kugelförmiger Körper 63 befestigt, der in dem dargestellten Bewegungszustand des KMG im Ortsbereich der Positionsbestimmungseinrichtung 24 positioniert ist. Da ein Körper an dem zweiten Teil der Drehvorrichtung befestigt ist, der zur Bestimmung der Kalibrierungsinformation zur Kalibrierung der Drehvorrichtung genutzt wird, ist es für die Gewinnung der Kalibrierungsinformation nicht erforderlich, einen Taststift an der Drehvorrichtung zu befestigen. Anders als in Fig. 7 dargestellt können daher zur Kalibrierung der Drehvorrichtung der Messkopf 67 und auch der Taststift 61 von der Drehvorrichtung 69 abgekoppelt werden. Insbesondere kann ein anderer Messkopf und/oder ein anderer Taststift an dem zweiten Teil 69b der Drehvorrichtung 69 angekoppelt sein, während der Körper 63 im Ortsbereich der Positionsbestimmungseinrichtung 24 angeordnet ist. Alternativ können an dem zweiten Teil der Drehvorrichtung kein Messkopf und kein Taster angeordnet sein. Wiederum kann, wie oben bereits beschrieben, statt dem Messkopf 67 ein Objekt gleicher Masse an dem zweiten Teil 69b angeordnet sein.

Statt der Drehvorrichtung 69 in Fig. 7, die eine einzige Drehachse R aufweist, kann an dem KMG eine andere Drehvorrichtung mit einer anders orientierten einzigen Drehachse oder mit mehreren Drehachsen angebracht sein. Vorzugsweise ist jedoch ein Körper jeweils an dem zweiten Teil der Drehvorrichtung (im Fall einer einzigen Drehachse) bzw. an dem letzten Teil der Drehvorrichtung (im Fall mehrerer Drehachsen) angeordnet, sodass für die Gewinnung der Kalibrierungsinformation kein Taststift an der Drehvorrichtung angekoppelt sein muss. Auch erlaubt es der Körper, dass die Gewinnung der Kalibrierungsinformation immer in der gleichen Weise möglich ist, obwohl z.B. verschiedene Taster und/oder Messköpfe nacheinander an der Drehvorrichtung angebracht werden. Es kann daher auch nach einem Wechsel des Messkopfes und/oder Tasters zur Ausführung anderer Messaufgaben bei der Bestimmung von Koordinaten eines Werkstücks in jeder Betriebsphase (z.B. jeweils nach dem Einwechseln eines anderen Messkopfes und/oder Tasters) der Körper in den Ortsbereich der Positionsbestimmungseinrichtung gebracht werden und Kalibrierungsinformation bezüglich der Drehvorrichtung gewonnen werden.

## Patentansprüche

1. Verfahren zum Kalibrieren einer an einem beweglichen Teil (8) eines Koordinatenmessgeräts (11) angebrachten Drehvorrichtung (9), die einen an dem beweglichen Teil (8) des Koordinatenmessgeräts (11) befestigten ersten Teil (9a) und einen relativ zu dem ersten Teil (9a) um eine Drehachse (R) der Drehvorrichtung (9) drehbaren zweiten Teil (9b) aufweist, an dem ein Messsensor (12) zur Vermessung von Werkstücken anbringbar ist, wobei
- die Drehvorrichtung (9) oder ein mit dem zweiten Teil (9b) verbundener Körper (13), durch einen Betrieb eines Antriebssystems des Koordinatenmessgeräts (11) in einen Ortsbereich einer Positionsbestimmungseinrichtung bewegt wird, die mit einer Basis (1) des Koordinatenmessgeräts (11) verbunden ist,
- mittels zumindest eines Sensors (15, 16) der Positionsbestimmungseinrichtung (14) eine Position der Drehvorrichtung (9) oder des mit dem zweiten Teil (9b) verbundenen Körpers (13) relativ zu der Positionsbestimmungseinrichtung (14) bestimmt wird,
- die Drehvorrichtung (9) in unterschiedliche Drehpositionen gebracht wird und in den unterschiedlichen Drehpositionen jeweils die Position der Drehvorrichtung (9) oder des mit dem zweiten Teil (9b) verbundenen Körpers (13) relativ zu der Positionsbestimmungseinrichtung (14) mittels des zumindest einen Sensors (15, 16) der Positionsbestimmungseinrichtung (14) bestimmt wird, während sich die Drehvorrichtung (9) oder der mit dem zweiten Teil (9b) verbundene Körper (13) in dem Ortsbereich der Positionsbestimmungseinrichtung (14) befindet, und
- die Drehvorrichtung (9) unter Berücksichtigung der mittels des zumindest einen Sensors (15, 16) der Positionsbestimmungseinrichtung (14) bestimmten Positionen kalibriert wird.

2. Verfahren nach Anspruch 1, wobei die Drehvorrichtung (9) oder der mit dem zweiten Teil (9b) verbundene Körper (13) an eine vorgegebene Position in einem Koordinatensystem der Positionsbestimmungseinrichtung (14) bewegt wird und von einem Messsystem (6) des Koordinatenmessgeräts (11), das zusätzlich zu der Positionsbestimmungseinrichtung (14) vorhanden ist und von dem während eines Messbetriebes des Koordinatenmessgeräts (11) zum Bestimmen von Koordinaten von Werkstücken Bewegungspositionen des beweglichen Teils (8) gemessen werden, gemessen wird, an welcher Bewegungsposition sich der bewegliche Teil (8) mit der daran angebrachten Drehvorrichtung (9) befindet, während die Drehvorrichtung (9) oder der mit dem zweiten Teil (9b) verbundene Körper (13) an der vorgegebenen Position ist, und wobei die Drehvorrichtung (9) unter Berücksichtigung der gemessenen Bewegungsposition kalibriert wird.

3. Verfahren nach Anspruch 1, wobei der bewegliche Teil mit der daran angebrachten Drehvorrichtung (9) in eine vorgegebene Position in einem Koordinatensystem des Koordinatenmessgeräts (11) bewegt wird und in der vorgegebenen Position die Position der Drehvorrichtung (9) oder des mit dem zweiten Teil (9b) verbundenen Körpers (13) relativ zu der Positionsbestimmungseinrichtung (14) bestimmt wird.

4. Verfahren nach einem der Ansprüche 1 bis 3, wobei der zumindest eine Sensor (15, 16) der Positionsbestimmungseinrichtung (14) ein berührungslos messender Abstandssensor ist.

5. Verfahren nach einem der Ansprüche 1 bis 4, wobei die Positionsbestimmungseinrichtung (14) zumindest zwei Sensoren (15, 16) aufweist, mittels denen die Position der Drehvorrichtung (9) oder des mit dem zweiten Teil (9b) verbundenen Körpers (13) relativ zu der Positionsbestimmungseinrichtung (14) bestimmt wird, wobei jeder der zumindest zwei Sensoren (15, 16) eine Bestimmungsrichtung (25, 26) hat, in der er die Position der Drehvorrichtung (9) oder des mit dem zweiten Teil (9b) verbundenen Körpers (13) relativ zu der Positionsbestimmungseinrichtung (14) bestimmt, und wobei die Bestimmungsrichtungen (25, 26) der zumindest zwei Sensoren (15, 16) paarweise senkrecht zueinander verlaufen.

6. Anordnung zum Kalibrieren einer an einem beweglichen Teil (8) eines Koordinatenmessgeräts (11) angebrachten Drehvorrichtung (9), wobei die Anordnung aufweist:
- das Koordinatenmessgerät (11), wobei das Koordinatenmessgerät (11) eine Basis (1) aufweist, relativ zu der der bewegliche Teil (8) durch einen Betrieb eines Antriebssystems des Koordinatenmessgeräts (11) bewegbar ist,
- die Drehvorrichtung (9), die mit einem ersten Teil (9a) an dem beweglichen Teil (8) des Koordinatenmessgeräts (11) angebracht ist und die einen relativ zu dem ersten Teil (9a) um eine Drehachse (R) der Drehvorrichtung (9) drehbaren zweiten Teil (9b) aufweist, an dem ein Messsensor (12) zur Vermessung von Werkstücken anbringbar ist,
- ein Messsystem des Koordinatenmessgeräts (11), von dem während eines Messbetriebes des Koordinatenmessgeräts (11) zum Bestimmen von Koordinaten von Werkstücken Bewegungspositionen des beweglichen Teils (8) gemessen werden,
- eine Positionsbestimmungseinrichtung (14), die zusätzlich zu dem Messsystem des Koordinatenmessgeräts (11) vorhanden ist, die mit der Basis des Koordinatenmessgeräts (11) verbunden ist und die zumindest einen Positionssensor (15, 16) zur Bestimmung einer Position der Drehvorrichtung (9) oder eines mit dem zweiten Teil (9b) verbundenen Körpers (13) hat,
- eine Steuerung (50) des Koordinatenmessgeräts (11), die ausgestaltet ist, die Drehvorrichtung (9) oder den mit dem zweiten Teil (9b) verbundenen Körper (13) durch einen Betrieb des Antriebssystems des Koordinatenmessgeräts (11) in einen Ortsbereich der Positionsbestimmungseinrichtung (14) zu bewegen, sodass mittels des zumindest einen Positionssensors (15, 16) die Position der Drehvorrichtung (9) oder des mit dem zweiten Teil (9b) verbundenen Körpers (13) relativ zu der Positionsbestimmungseinrichtung (14) bestimmt wird,
wobei die Steuerung (50) ausgestaltet ist, die Drehvorrichtung (9) oder den mit dem zweiten Teil (9b) verbundenen Körper (13) in dem Ortsbereich der Positionsbestimmungseinrichtung (14) zu positionieren, und zwar jeweils in einer von unterschiedlichen Drehpositionen der Drehvorrichtung (9), sodass jeweils in der einen von unterschiedlichen Drehpositionen die Position der Drehvorrichtung (9) oder des mit dem zweiten Teil (9b) verbundenen Körpers (13) mittels des zumindest einen Positionssensors (15, 16) relativ zu der Positionsbestimmungseinrichtung (14) bestimmt wird, während sich die Drehvorrichtung (9) oder der mit dem zweiten Teil (9b) verbundene Körper (13) in dem Ortsbereich der Positionsbestimmungseinrichtung (14) befindet, und
- eine Kalibrierungseinrichtung, die ausgestaltet ist, die Drehvorrichtung (9) unter Berücksichtigung der bestimmten Positionen zu kalibrieren.

7. Anordnung nach Anspruch 6, wobei die Steuerung (50) ausgestaltet ist, die Drehvorrichtung (9) oder den mit dem zweiten Teil (9b) verbundenen Körper (13) an eine vorgegebene Position in einem Koordinatensystem der Positionsbestimmungseinrichtung (14) zu bewegen, wobei das Messsystem des Koordinatenmessgeräts (11) ausgestaltet ist zu messen, an welcher Bewegungsposition sich der bewegliche Teil (8) mit der daran angebrachten Drehvorrichtung (9) befindet, während die Drehvorrichtung (9) oder der mit dem zweiten Teil (9b) verbundene Körper (13) an der vorgegebenen Position ist, und wobei die Kalibrierungseinrichtung ausgestaltet ist, die Drehvorrichtung (9) unter Berücksichtigung der gemessenen Bewegungsposition zu kalibrieren.

8. Anordnung nach Anspruch 6, wobei die Steuerung (50) ausgestaltet ist, den beweglichen Teil (8) mit der daran angebrachten Drehvorrichtung (9) in eine vorgegebene Position in einem Koordinatensystem des Koordinatenmessgeräts (11) zu bewegen, und wobei die Positionsbestimmungseinrichtung (14) ausgestaltet ist, in der vorgegebenen Position die Position der Drehvorrichtung (9) oder des mit dem zweiten Teil (9b) verbundenen Körpers (13) relativ zu der Positionsbestimmungseinrichtung (14) zu bestimmen.

9. Anordnung nach einem der Ansprüche 6 bis 8, wobei der zumindest eine Sensor (15, 16) der Positionsbestimmungseinrichtung (14) ein berührungslos messender Abstandssensor ist.

10. Anordnung nach einem der Ansprüche 6 bis 9, wobei die Positionsbestimmungseinrichtung (14) zumindest zwei Sensoren (15, 16) aufweist, mittels denen die Position der Drehvorrichtung (9) oder des mit dem zweiten Teil (9b) verbundenen Körpers (13) relativ zu der Positionsbestimmungseinrichtung (14) bestimmt wird, wobei jeder der zumindest zwei Sensoren (15, 16) eine Bestimmungsrichtung (25, 26) hat, in der er die Position der Drehvorrichtung (9) oder des mit dem zweiten Teil (9b) verbundenen Körpers (13) relativ zu der Positionsbestimmungseinrichtung (14) bestimmt, und wobei die Bestimmungsrichtungen (25, 26) der zumindest zwei Sensoren (15, 16) paarweise senkrecht zueinander verlaufen.

## Claims

1. Method for calibrating a rotary apparatus (9) mounted on a movable part (8) of a coordinate measuring machine (11), which rotary apparatus has a first part (9a), which is fastened to the movable part (8) of the coordinate measuring machine (11), and a second part (9b) which is rotatable relative to the first part (9a) about an axis of rotation (R) of the rotary apparatus (9) and on which a measurement sensor (12) for measuring workpieces is mountable, wherein
- the rotary apparatus (9), or a body (13) connected to the second part (9b), is moved, by operation of a drive system of the coordinate measuring machine (11), into a spatial region of a position determining device which is connected to a base (1) of the coordinate measuring machine (11),
- a position of the rotary apparatus (9), or of the body (13) connected to the second part (9b), relative to the position determining device (14) is determined by means of at least one sensor (15, 16) of the position determining device (14),
- the rotary apparatus (9) is brought into different rotary positions and, in the different rotary positions, in each case the position of the rotary apparatus (9), or of the body (13) connected to the second part (9b), relative to the position determining device (14) is determined by means of the at least one sensor (15, 16) of the position determining device (14) while the rotary apparatus (9), or the body (13) connected to the second part (9b), is situated in the spatial region of the position determining device (14), and
- the rotary apparatus (9) is calibrated taking account of the positions determined by means of the at least one sensor (15, 16) of the position determining device (14).

2. Method according to Claim 1, wherein the rotary apparatus (9), or the body (13) connected to the second part (9b), is moved to a predefined position in a coordinate system of the position determining device (14), and, by means of a measuring system (6) of the coordinate measuring machine (11), which measuring system is provided in addition to the position determining device (14) and which measuring system, during a measurement operation of the coordinate measuring machine (11) for determining coordinates of workpieces, measures movement positions of the movable part (8), it is measured what movement position the movable part (8) with the rotary apparatus (9) mounted thereon is situated at while the rotary apparatus (9), or the body (13) connected to the second part (9b), is at the predefined position, and wherein the rotary apparatus (9) is calibrated taking account of the measured movement position.

3. Method according to Claim 1, wherein the movable part with the rotary apparatus (9) mounted thereon is moved into a predefined position in a coordinate system of the coordinate measuring machine (11), and in the predefined position, the position of the rotary apparatus (9), or of the body (13) connected to the second part (9b), relative to the position determining device (14) is determined.

4. Method according to one of Claims 1 to 3, wherein the at least one sensor (15, 16) of the position determining device (14) is a distance sensor which performs measurement contactlessly.

5. Method according to one of Claims 1 to 4, wherein the position determining device (14) has at least two sensors (15, 16) by means of which the position of the rotary apparatus (9), or of the body (13) connected to the second part (9b), relative to the position determining device (14) is determined, wherein each of the at least two sensors (15, 16) has a determination direction (25, 26) in which it determines the position of the rotary apparatus (9), or of the body (13) connected to the second part (9b), relative to the position determining device (14), and wherein the determination directions (25, 26) of the at least two sensors (15, 16) run perpendicular to one another in pairs.

6. Arrangement for calibrating a rotary apparatus (9) mounted on a movable part (8) of a coordinate measuring machine (11), wherein the arrangement has:
- the coordinate measuring machine (11), wherein the coordinate measuring machine (11) has a base (1) relative to which the movable part (8) is movable by operation of a drive system of the coordinate measuring machine (11),
- the rotary apparatus (9), which is mounted with a first part (9a) on the movable part (8) of the coordinate measuring machine (11) and which has a second part (9b), which second part is rotatable relative to the first part (9a) about an axis of rotation (R) of the rotary apparatus (9) and on which second part a measurement sensor (12) for measuring workpieces is mountable,
- a measuring system of the coordinate measuring machine (11), which measuring system, during a measurement operation of the coordinate measuring machine (11) for determining coordinates of workpieces, measures movement positions of the movable part (8),
- a position determining device (14) which is provided in addition to the measuring system of the coordinate measuring machine (11), which is connected to the base of the coordinate measuring machine (11) and which has at least one position sensor (15, 16) for determining a position of the rotary apparatus (9) or of a body (13) connected to the second part (9b),
- a controller (50) of the coordinate measuring machine (11), which controller is designed to move the rotary apparatus (9), or the body (13) connected to the second part (9b), by operation of the drive system of the coordinate measuring machine (11), into a spatial region of the position determining device (14) such that the position of the rotary apparatus (9), or of the body (13) connected to the second part (9b), relative to the position determining device (14) is determined by means of the at least one position sensor (15, 16),
wherein the controller (50) is designed to position the rotary apparatus (9), or the body (13) connected to the second part (9b), in the spatial region of the position determining device (14), specifically in each case in one of different rotary positions of the rotary apparatus (9), such that, in each case in the one of different rotary positions, the position of the rotary apparatus (9), or of the body (13) connected to the second part (9b), relative to the position determining device (14) is determined by means of the at least one position sensor (15, 16) while the rotary apparatus (9), or the body (13) connected to the second part (9b), is situated in the spatial region of the position determining device (14), and
- a calibrating device which is designed to calibrate the rotary apparatus (9) taking account of the determined positions.

7. Arrangement according to Claim 6, wherein the controller (50) is designed to move the rotary apparatus (9), or the body (13) connected to the second part (9b), to a predefined position in a coordinate system of the position determining device (14), wherein the measuring system of the coordinate measuring machine (11) is designed to measure what movement position the movable part (8) with the rotary apparatus (9) mounted thereon is situated at while the rotary apparatus (9), or the body (13) connected to the second part (9b), is at the predefined position, and wherein the calibrating device is designed to calibrate the rotary apparatus (9) taking account of the measured movement position.

8. Arrangement according to Claim 6, wherein the controller (50) is designed to move the movable part (8) with the rotary apparatus (9) mounted thereon into a predefined position in a coordinate system of the coordinate measuring machine (11), and wherein the position determining device (14) is designed to, in the predefined position, determine the position of the rotary apparatus (9), or of the body (13) connected to the second part (9b), relative to the position determining device (14).

9. Arrangement according to one of Claims 6 to 8, wherein the at least one sensor (15, 16) of the position determining device (14) is a distance sensor which performs measurement contactlessly.

10. Arrangement according to one of Claims 6 to 9, wherein the position determining device (14) has at least two sensors (15, 16) by means of which the position of the rotary apparatus (9), or of the body (13) connected to the second part (9b), relative to the position determining device (14) is determined, wherein each of the at least two sensors (15, 16) has a determination direction (25, 26) in which it determines the position of the rotary apparatus (9), or of the body (13) connected to the second part (9b), relative to the position determining device (14), and wherein the determination directions (25, 26) of the at least two sensors (15, 16) run perpendicular to one another in pairs.

## Revendications

1. Procédé d'étalonnage d'un dispositif rotatif (9) monté sur une partie mobile (8) d'un appareil de mesure de coordonnées (11), qui possède une première partie (9a) fixée à la partie mobile (8) de l'appareil de mesure de coordonnées (11) et une deuxième partie (9b), qui peut tourner par rapport à la première partie (9a) autour d'un axe de rotation (R) du dispositif rotatif (9) et sur laquelle peut être monté un capteur de mesure (12) destiné à jauger des pièces,
- le dispositif rotatif (9), ou un corps (13) relié à la deuxième partie (9b), étant déplacé par un fonctionnement d'un système d'entraînement de l'appareil de mesure de coordonnées (11) dans une zone locale d'un appareil de détermination de position qui est relié à une base (1) de l'appareil de mesure de coordonnées (11),
- une position du dispositif rotatif (9) ou du corps (13) relié à la deuxième partie (9b) par rapport à l'appareil de détermination de position (14) étant déterminée au moyen d'au moins un capteur (15, 16) de l'appareil de détermination de position (14),
- le dispositif rotatif (9) étant amené dans différentes positions de rotation et la position du dispositif rotatif (9) ou du corps (13) relié à la deuxième partie (9b) par rapport à l'appareil de détermination de position (14) étant respectivement déterminée dans les différentes positions de rotation au moyen de l'au moins un capteur (15, 16) de l'appareil de détermination de position (14) pendant que le dispositif rotatif (9) ou le corps (13) relié à la deuxième partie (9b) se trouve dans la zone locale de l'appareil de détermination de position (14), et
- le dispositif rotatif (9) étant étalonné en tenant compte des positions déterminées au moyen de l'au moins un capteur (15, 16) de l'appareil de détermination de position (14).

2. Procédé selon la revendication 1, le dispositif rotatif (9) ou le corps (13) relié à la deuxième partie (9b) étant déplacé à une position prédéfinie dans un système de coordonnées de l'appareil de détermination de position (14) et étant mesuré par un système de mesure (6) de l'appareil de mesure de coordonnées (11), lequel est présent en plus de l'appareil de détermination de position (14) et par lequel sont mesurées des positions de déplacement de la partie mobile (8) pendant un mode de mesure de l'appareil de mesure de coordonnées (11) en vue de déterminer les coordonnées de pièces, position de déplacement à laquelle se trouve la partie mobile (8) sur laquelle est monté le dispositif rotatif (9) pendant que le dispositif rotatif (9) ou le corps (13) relié à la deuxième partie (9b) se trouve à la position prédéfinie, et le dispositif rotatif (9) étant étalonné en tenant compte de la position de déplacement mesurée.

3. Procédé selon la revendication 1, la partie mobile sur laquelle est monté le dispositif rotatif (9) étant déplacée dans une position prédéfinie dans un système de coordonnées de l'appareil de mesure de coordonnées (11) et la position du dispositif rotatif (9) ou du corps (13) relié à la deuxième partie (9b) par rapport à l'appareil de détermination de position (14) étant déterminée dans la position prédéfinie.

4. Procédé selon l'une des revendications 1 à 3, l'au moins un capteur (15, 16) de l'appareil de détermination de position (14) étant un capteur d'écart à mesure sans contact.

5. Procédé selon l'une des revendications 1 à 4, l'appareil de détermination de position (14) possédant au moins deux capteurs (15, 16) au moyen desquels est déterminée la position du dispositif rotatif (9) ou du corps (13) relié à la deuxième partie (9b) par rapport à l'appareil de détermination de position (14), chacun des au moins deux capteurs (15, 16) ayant une direction de détermination (25, 26) dans laquelle il détermine la position du dispositif rotatif (9) ou du corps (13) relié à la deuxième partie (9b) par rapport à l'appareil de détermination de position (14), et les directions de détermination (25, 26) des au moins deux capteurs (15, 16) s'étendant perpendiculairement par paires les unes par rapport aux autres.

6. Arrangement d'étalonnage d'un dispositif rotatif (9) monté sur une partie mobile (8) d'un appareil de mesure de coordonnées (11), l'arrangement comprenant :
- l'appareil de mesure de coordonnées (11), l'appareil de mesure de coordonnées (11) possédant une base (1) par rapport à laquelle la partie mobile (8) peut être déplacée par un fonctionnement d'un système d'entraînement de l'appareil de mesure de coordonnées (11),
- le dispositif rotatif (9), qui est monté par une première partie (9a) à la partie mobile (8) de l'appareil de mesure de coordonnées (11) et qui possède une deuxième partie (9b), qui peut tourner par rapport à la première partie (9a) autour d'un axe de rotation (R) du dispositif rotatif (9) et sur laquelle peut être monté un capteur de mesure (12) destiné à jauger des pièces,
- un système de mesure de l'appareil de mesure de coordonnées (11), par lequel des positions de déplacement de la partie mobile (8) sont mesurées pendant un mode de mesure de l'appareil de mesure de coordonnées (11) en vue de déterminer des coordonnées de pièces,
- un appareil de détermination de position (14), qui est présent en plus du système de mesure de l'appareil de mesure de coordonnées (11), qui est relié à la base de l'appareil de mesure de coordonnées (11) et qui comporte au moins un capteur de position (15, 16) destiné à déterminer une position du dispositif rotatif (9) ou d'un corps (13) relié à la deuxième partie (9b),
- une commande (50) de l'appareil de mesure de coordonnées (11), laquelle est configurée pour déplacer le dispositif rotatif (9) ou le corps (13) relié à la deuxième partie (9b) par un fonctionnement du système d'entraînement de l'appareil de mesure de coordonnées (11) dans une zone locale de l'appareil de détermination de position (14), de sorte que la position du dispositif rotatif (9) ou du corps (13) relié à la deuxième partie (9b) par rapport à l'appareil de détermination de position (14) soit déterminée au moyen de l'au moins un capteur de position (15, 16),
la commande (50) étant configurée pour positionner le dispositif rotatif (9) ou le corps (13) relié à la deuxième partie (9b) dans la zone locale de l'appareil de détermination de position (14), à savoir à chaque fois dans une des différentes positions de rotation du dispositif rotatif (9), de telle sorte que la position du dispositif rotatif (9) ou du corps (13) relié à la deuxième partie (9b) par rapport à l'appareil de détermination de position (14) soit déterminée au moyen de l'au moins un capteur de position (15, 16) dans l'une parmi différentes positions de rotation pendant que le dispositif rotatif (9) ou le corps (13) relié à la deuxième partie (9b) se trouve dans la zone locale de l'appareil de détermination de position (14), et
- un appareil d'étalonnage qui est configuré pour étalonner le dispositif rotatif (9) en tenant compte des positions déterminées.

7. Arrangement selon la revendication 6, la commande (50) étant configurée pour déplacer le dispositif rotatif (9) ou le corps (13) relié à la deuxième partie (9b) à une position prédéfinie dans un système de coordonnées de l'appareil de détermination de position (14), le système de mesure de l'appareil de mesure de coordonnées (11) étant configuré pour mesurer la position de déplacement à laquelle se trouve la partie mobile (8) sur laquelle est monté le dispositif rotatif (9) pendant que le dispositif rotatif (9) ou le corps (13) relié à la deuxième partie (9b) se trouve à la position prédéfinie, et l'appareil d'étalonnage étant configuré pour étalonner le dispositif rotatif (9) en tenant compte de la position de déplacement mesurée.

8. Arrangement selon la revendication 6, la commande (50) étant configurée pour déplacer la partie mobile (8) sur laquelle est monté le dispositif rotatif (9) dans une position prédéfinie dans un système de coordonnées de l'appareil de mesure de coordonnées (11) et l'appareil de détermination de position (14) étant configuré pour déterminer, dans la position prédéfinie, la position du dispositif rotatif (9) ou du corps (13) relié à la deuxième partie (9b) par rapport à l'appareil de détermination de position (14).

9. Arrangement selon l'une des revendications 6 à 8, l'au moins un capteur (15, 16) de l'appareil de détermination de position (14) étant un capteur d'écart à mesure sans contact.

10. Arrangement selon l'une des revendications 6 à 9, l'appareil de détermination de position (14) possédant au moins deux capteurs (15, 16) au moyen desquels est déterminée la position du dispositif rotatif (9) ou du corps (13) relié à la deuxième partie (9b) par rapport à l'appareil de détermination de position (14), chacun des au moins deux capteurs (15, 16) ayant une direction de détermination (25, 26) dans laquelle il détermine la position du dispositif rotatif (9) ou du corps (13) relié à la deuxième partie (9b) par rapport à l'appareil de détermination de position (14), et les directions de détermination (25, 26) des au moins deux capteurs (15, 16) s'étendant perpendiculairement par paires les unes par rapport aux autres.
